(19) Europäisches Patentamt
European Patent Office
Office européen des brevets

(11) **EP 2 333 595 A1**

(12) **EUROPEAN PATENT APPLICATION**
published in accordance with Art. 153(4) EPC

(43) Date of publication:
**15.06.2011 Bulletin 2011/24**

(21) Application number: **09811457.2**

(22) Date of filing: **28.08.2009**

(51) Int Cl.:
***G02B 6/122*** *(2006.01)* ***G02B 6/12*** *(2006.01)*

(86) International application number:
**PCT/JP2009/065094**

(87) International publication number:
**WO 2010/026931 (11.03.2010 Gazette 2010/10)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **05.09.2008 JP 2008229030**

(71) Applicant: **Sumitomo Bakelite Company Limited**
**Shinagawa-ku**
**Tokyo 140-0002 (JP)**

(72) Inventors:
- **TERADA Shinsuke**
**Tokyo 140-0002 (JP)**
- **MATSUYAMA Mutsuhiro**
**Tokyo 140-0002 (JP)**
- **CHOKI Koji**
**Tokyo 140-0002 (JP)**

(74) Representative: **Solf, Alexander**
**Patentanwälte Dr. Solf & Zapf**
**Candidplatz 15**
**81543 München (DE)**

(54) **OPTICAL WAVEGUIDE, OPTICAL INTERCONNECTION, OPTO-ELECTRIC HYBRID BOARD, AND ELECTRONIC DEVICE**

(57) An optical waveguide is provided. The optical waveguide includes a plurality of core portions and a plurality of clad portions in which each core portion being provided between a pair of clad portions. Each of the plurality of clad portions comprises: a low refractive-index area being in contact with the core portion, wherein a refractive index of the low refractive-index area is lower than that of the plurality of core portions; and a plurality of high refractive-index areas separated from the core portion through the low refractive-index area, wherein a refractive index of the plurality of high refractive-index areas is higher than the refractive index of the low refractive-index area. The plurality of high refractive-index areas are provided in the clad portion in an aligned manner or in a scattered manner. The plurality of high refractive-index areas are constituted of the same kind of material as a constituent material of the plurality of core portions. The plurality of high refractive-index areas make light scattered. Such light does not enter the plurality of core portions and involuntarily enters the plurality of clad portions. By doing so, it is possible to prevent the light from reaching light receiving elements, so that it is possibly to improve quality of optical communications.

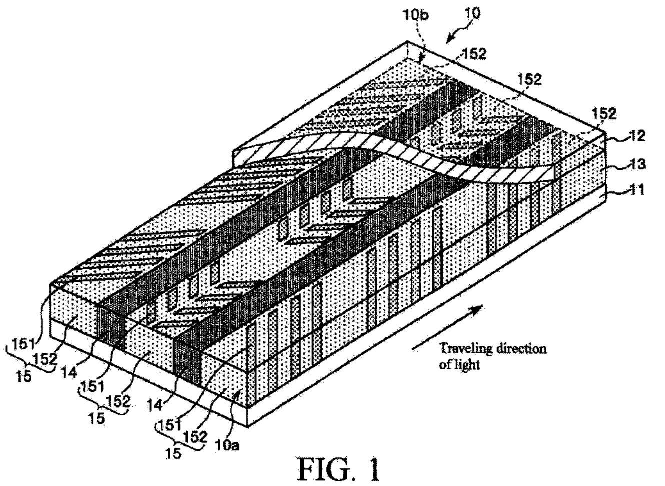


FIG. 1

EP 2 333 595 A1

Printed by Jouve, 75001 PARIS (FR)

## Description

### TECHNICAL FIELD

The present invention relates to an optical waveguide, an optical wiring line, an optical/electrical combination substrate and an electronic device.

### RELATED ART

Recently, optical communications in which data is transferred by using optical frequency carrier waves are becoming increasingly important. In such optical communications, an optical waveguide is used as one means for conducting or guiding the optical frequency carrier waves from one point to another point.

For example, the optical waveguide includes a pair of clad layers and a core layer provided between the pair of clad layers . The core layer includes core portions having a linear shape and clad portions provided on both sides of each of the core portions so as to sandwich the core portion therebetween. The core portions are formed of substantially a transparent material for light to be used as the optical frequency carrier waves. The clad layers and the clad portions are formed of a material having a refractive index lower than that of the core portions.

In Patent Document 1, a polymer optical waveguide is disclosed. Such a polymer optical waveguide has two clad layers (upper clad layer and lower clad layer) and a polysilane layer provided between the two clad layers. The polysilane layer is formed by using a polysilane composition containing polysilane and an organic peroxide. Furthermore, the polysilane layer includes a core layer (core portion) and side clad layers (clad portions) provided on the both sides of the core layer.

Such an optical waveguide has a structure in which the core portion is surrounded by the clad portions and the clad layers each having the refractive index lower than that of the core portion. Therefore, light input into an end of the core portion is transferred along an axis thereof while reflecting on boundaries between the core portion and the clad portions and clad layers.

Furthermore, a light emitting element such as a semiconductor laser is provided on an incoming side of the optical waveguide. Light generated from the light emitting element is incident into the core portion of the optical waveguide. On the other hand, a light receiving element such as a photodiode is provided on an outgoing side of the optical waveguide. Light propagating through the core portion is received by the light receiving element. Thus, optical communications are possible based on blink patterns of the light received by the light receiving element.

Meanwhile, in the case where an optical waveguide is adjacent to a medium having a low refractive index, concretely, the optical waveguide is present in the air (atmosphere), light is reflected at not only boundaries between a core portion and clad portions but also boundaries between the clad portions and the air.

In this regard, it is preferred that all of light generated from a light emitting element are incident from an incoming side of the optical waveguide into the core portion. However, there are cases that a part of the light is incident into the clad portions due to a misalignment between light axes of the optical waveguide and the light emitting element and a poor matching of a number of opening between the optical waveguide and the light emitting element.

As described above, the incident light to the clad portions is repeatedly reflected at the boundaries between the clad portions and the air, and then propagated to the end portions of the clad portions. Finally, the light is outgoing from the end portions of the clad portions, and then the light is received by the light receiving element with light propagated from the core portion. As a result, there are problems as follows: the light which has propagated through the clad portions is regarded as noises, thereby lowering an S/N ratio, so that quality loss of optical communications such as crosstalk and the like is caused.

In addition, in the case where a part having a materially low difference in refractive index is present between the core portions and the clad portions, light propagating through the core portion may be leaked into the clad portions from that part. In this case, the leaked light propagates through the clad portions, and then is regarded as the noise. Consequently, there is a fear that further quality loss of the optical communications is caused.

The Patent Document 1 is Japanese Patent Application Laid-open No. 2004-333883.

### SUMMARY OF THE INVENTION

It is an object of the present invention to provide an optical waveguide that can increase an S/N ratio of signal light by having means for keeping light propagating through clad portions away from core portions and perform optical communications in high quality. Furthermore, it is another object of the present invention to provide an optical wiring line provided with the optical waveguide and having high performance, and it is also an abject of the present invention to provide an optical/electrical combination substrate using the optical wiring line and an electronic device provided with the optical/electrical combination substrate.

In order to achieve the above object, the present invention is directed to an optical waveguide including a plurality of core portions and a plurality of clad portions in which each core portion being provided between a pair of clad portions, wherein each of the plurality of clad portions comprising: a low refractive-index area being in contact with the core portion, wherein a refractive index of the low refractive-index area is lower than that of the plurality of core portions; and a plurality of high refractive-index areas separated from the core portion through the low refractive-index area, wherein a refractive index of the plurality of high refractive-index areas is higher than the refractive index of the low refractive-index area; wherein the plurality of high refractive-index areas are provided in the clad portion in an aligned manner or in a scattered manner.

In the above optical waveguide according to the present invention, it is preferred that the plurality of high refractive-index areas are constituted of the same kind of material as a constituent material of the plurality of core portions.

In the above optical waveguide according to the present invention, it is also preferred that a difference between the refractive index of the plurality of high refractive-index areas and the refractive index of the low refractive-index area is 0.5% or more.

In the above optical waveguide according to the present invention, it is also preferred that the plurality of high refractive-index areas are provided in the clad portion for refracting light passing through the clad portion in a direction far away from the core portion or for scattering the light in the clad portion ununiformly.

In the above optical waveguide according to the present invention, it is also preferred that each of the plurality of high refractive-index areas is formed into a particle shape.

In the above optical waveguide according to the present invention, it is also preferred that each high refractive-index area having the particle shape is formed with an irregularities on its outer surface.

In the above optical waveguide according to the present invention, it is also preferred that the high refractive-index areas each having the particle shape are ununiformly scattered in the clad portion.

In the above optical waveguide according to the present invention, it is also preferred that each of the plurality of high refractive-index areas is formed into a strip shape.

In the above optical waveguide according to the present invention, it is also preferred that each of the high refractive-index areas having the strip shape has a longitudinal axis line, and wherein the high refractive-index areas are provided in the clad portion in a state that their longitudinal axis lines are inclined with respect to an axial line of the core portion so that an angle defined by the longitudinal axis line of each high refractive-index area and a perpendicular line which is normal to the axial line of the core portion forms an acute angle.

In the above optical waveguide according to the present invention, it is also preferred that the acute angle defined by the longitudinal axis line of each high refractive-index area having the strip shape and the perpendicular line is in the range of 10 to 85°.

In the above optical waveguide according to the present invention, it is also preferred that each of the high refractive-index areas having the strip shape is formed so as to have an elongated triangle shape.

In the above optical waveguide according to the present invention, it is also preferred that each of the high refractive-index areas having the elongated triangle shape is configured so that a cross-sectional area of the elongated triangle shape gradually increases as being far away from the core portion.

In the above optical waveguide according to the present invention, it is also preferred that each of the high refractive-index areas having the strip shape has a longitudinal axis line, and wherein the high refractive-index areas are provided in the clad portion so that extended lines of their longitudinal axis lines are perpendicular to an axial line of the core portion.

In the above optical waveguide according to the present invention, it is also preferred that each of the high refractive-index areas having the strip shape is formed so as to have an elongated rectangle shape.

In the above optical waveguide according to the present invention, it is also preferred that the plurality of high refractive-index areas each having the strip shape are arranged in the clad portion in parallel with each other.

In the above optical waveguide according to the present invention, it is also preferred that the optical waveguide has an incoming end surface from which light enters into the clad portion and an outgoing end surface opposite to the incoming end surface, wherein the plurality of high refractive-index areas are arranged so as not to expose to the incoming end surface and the outgoing end surface.

In the above optical waveguide according to the present invention, it is also preferred that the plurality of high refractive-index areas are manufactured by the same process as that of the plurality of core portions.

In the above optical waveguide according to the present invention, it is also preferred that the optical waveguide is comprised of a laminated body in which a first layer, a second layer and a third layer are laminated in this order, wherein a part of the second layer is constituted from the plurality of core portions, wherein a remaining part of the second layer, the first layer and the third layer are constituted from the plurality of clad portions.

In the above optical waveguide according to the present invention, it is also preferred that the plurality of high refractive-index areas are provided in the remaining part of the second layer.

In the above optical waveguide according to the present invention, it is also preferred that the plurality of core

portions and at least a part of the plurality of clad portions are constituted of a norbornene-based polymer as a main component thereof.

In order to achieve the above object, the present invention is directed to an optical wiring line provided with the optical waveguide as described above.

In order to achieve the above object, the present invention is also directed to an optical/electrical combination substrate, comprising: a substrate; an electrical wiring line mounted on the substrate; and the optical wiring line as described above and provided on the substrate.

In order to achieve the above object, the present invention is also directed to an electronic device provided with the optical/electrical combination substrate as described above.

## BRIEF DESCRIPTION OF THE DRAWINGS

FIG. 1 is a perspective view showing a first embodiment of an optical waveguide of the present invention (a part thereof is cut away and transparentized).
FIG. 2 is a plan view showing only a core layer of the optical waveguide shown in FIG. 1.
FIG. 3 is a view showing one example of passages of light propagating through the core layer shown in FIG. 2.
FIG. 4 is a sectional view schematically showing a process example of a method of manufacturing the optical waveguide shown in FIG. 1.
FIG. 5 is a sectional view schematically showing a process example of a method of manufacturing the optical waveguide shown in FIG. 1.
FIG. 6 is a sectional view, schematically showing a process example of a method of manufacturing the optical waveguide shown in FIG. 1.
FIG. 7 is a sectional view schematically showing a process example of a method of manufacturing the optical waveguide shown in FIG. 1.
FIG. 8 is a sectional view schematically showing a process example of a method of manufacturing the optical waveguide shown in FIG. 1.
FIG. 9 is a view showing another configuration example of the first embodiment shown in FIG. 2.
FIG. 10 is a view showing other configuration example of the first embodiment shown in FIG. 2.
FIG. 11 is a plan view showing only a core layer of a second embodiment of the optical waveguide according to the present invention.
FIG. 12 is a view showing another configuration example of the second embodiment shown in FIG. 11.
FIG. 13 is a view to explain a method of measuring an intensity of outgoing light from a clad portion of an optical waveguide.
FIG. 14 is a view to explain a method of evaluating crosstalk.
FIG. 15 is a graph showing intensities of lights propagated from clad portions.
FIG. 16 is a graph showing intensities of lights of crosstalk.
FIG. 17 is a plan view showing only a core layer of a conventional optical waveguide.

## BEST MODE FOR CARRYING OUT THE INVENTION

Hereinafter, an optical waveguide, an optical wiring line, an optical/electrical combination substrate and an electronic device according to the present invention will be described in detail based on certain preferred embodiments shown in the accompanying drawings.

<First Embodiment>

First of all, a description will be made on a first embodiment of an optical waveguide according to the present invention.

FIG. 1 is a perspective view showing a first embodiment of an optical waveguide of the present invention (a part thereof is cut away and transparentized), FIG. 2 is a plan view showing only a core layer of the optical waveguide shown in FIG. 1, FIG. 3 is a view showing one example of passages of light propagating the core layer shown in FIG. 2. In the following description, the upper side in FIG. 1 will be referred to as "upper" or "upside" and the lower side thereof will be referred to as "lower" or "downside", wherein the right side in each of FIGs. 2 and 3 will be referred to as "right" or "outgoing side" and the left side thereof will be referred to as "left" or "incoming side". Furthermore, the FIG. 1 is drawn with exaggeration in a thickness direction (a vertical direction of the each figure) of a layer.

An optical Waveguide 10 shown in FIG. 1 includes a clad layer (clad portion) 11, a core layer 13 and a clad

layer (clad portion) 12 which are laminated together in this order from the lower side of FIG. 1. In the core layer 13, core portions 14 having a predetermined pattern and side clad portions 15 (clad portions) provided adjacent to each of the core portions (waveguide channels) 14 are formed. In FIG. 1, two core portions 14 and three side clad portions 15 are provided alternately.

In the optical waveguide 10 shown in FIG. 1, incident light from an incoming end surface 10a into the core portions 14 is totally reflected at interfacial surfaces between the core portions 14 and the clad portions (the clad layers 11 and 12 and the side clad portions 15), thereby propagating the light to an outgoing side. By doing so, it is possible to obtain the light from the core portions 14 in an outgoing end surface 10b.

As described in detail below, each of the side clad portions 15 includes a low refractive-index area 152 (one area in the side clad portions 152) and a plurality of high refractive-index areas 151 of which refractive index is higher than that of the low refractive-index area 152. In other worlds, each of the side clad portions 15 is divided to the plurality of high refractive-index areas 151 and the low refractive-index area 152 of which refractive index is lower than that of the high refractive-index areas 151. In addition to that, the plurality of high refractive-index areas 151 shown in FIG. 1 is lined up in the respective side clad portions 15.

A refractive index difference between the core portions 14 and the low refractive-index area 152 in each of the side clad portions 15 is not limited to a specific value, but is preferable 0.5% or more, and more preferably 0.8% or more. An upper limit value thereof may be not set to a specific value, but is preferably about 5.5%. If the refractive index difference is smaller than the lower limit value noted above, there is a case in that a light propagation effect is reduced. On the other hand, even if the refractive index difference is set greater than the upper limit value, the light propagation effect can no longer be expected to further increase.

In this regard, in the case where the refractive index of the core portions 14 is defined as A and the refractive index, of the low refractive-index area 152 in each of the side clad portions 15 is defined as B, the refractive index difference is represented by the following equation:

$$\text{Refractive Index Difference } (\%) = |A/B - 1| \times 100.$$

Further in the structure shown in FIG. 1, each of the core portions 14 is formed so as to have a linear shape in a planar view thereof. However, each of the core portions 14 may have an arbitrary shape such a shape provided with curved portions in a middle thereof or a shape provided with forked portions in a middle thereof. In this regard, it is to be noted that by using a method of manufacturing the optical waveguide 10 as described later, it is possible to easily form core portions 14 each having a complex and arbitrary shape with high dimensional accuracy.

Further, a cross-sectional shape of each of the core portions 14 has a quadrangular shape such as a square shape or a rectangle shape.

The width and height of each of the core portions 14 are not limited to a specific value, but is preferably in the range of about 1 to 200 μm, more preferably in the range of about 5 to 100 μm, and even more preferably in the range of about 10 to 60 μm.

The core portions 14 are formed of a material having a refractive index higher than that of a constituent material in the low refractive-index areas 152 of each of the side clad portions 15. Further, the core portions 14 are formed of the material having the refractive index higher than that of a constituent material of the clad layers 11 and 12.

The constituent materials of the core portions 14, the side clad portions 15 and the clad layers 11 and 12 are not limited to specific kinds, as long as they can make the refractive index difference set forth above. In the present embodiment, the core portions 14 and the side clad portions 15 are made of the same material as each other (core layer 13). The refractive index differences between the core portions 14 and the low refractive-index areas 152 and between the low refractive-index areas 152 and the high refractive-index areas 151 are developed by a difference between chemical structures of the constituent materials thereof, respectively.

Any materials can be used as a constituent material of the core layer 13 as long as the constituent material are substantially transparent with respect to the light propagating the core portions 14. Specifically, examples of the constituent material include: various kinds of resin materials such as an acryl-based resin, a methacryl-based resin, polycarbonate, polystyrene, an epoxy resin, polyamide, polyimide, polybenzoxazole, polysilane polysilazane and a cyclic olefin-based resin such as a benzo cyclobutene-based resin and a norbornene-based resin; a glass material such as quartz glass and borosilicic acid glass; and the like.

In order to develop the refractive index difference due to the difference between the chemical structures as this embodiment, it is preferred that a material whose refractive index is changed by being irradiated with an activated energy ray such as an ultraviolet ray or an electron ray (or by being additionally heated) is used among the constituent materials.

Examples of such a material include a material whose chemical structures can be changed by breaking at least

a part of bonds or removing at least a part of functional groups by being irradiated with the activated energy ray or heated.

Specifically, examples of a base resin of the material involving the structure change as described above include: a silane-based resin such as polysilane (e.g., polymethyl phenyl silane) and polysilazane (e.g., perhydropolysilazane); and the following resins (1) to (6) having functional groups in side chains or terminals of molecules. (1) an addition-type (co)polymer obtained by addition (co)polymerization reaction between a norbornene-based monomer, (2) an addition-type copolymer obtained by addition copolymerization reaction between the norbornene-based monomer and ethylene or α-olefin, (3) an addition-type copolymer obtained by addition copolymerization reaction among the norbornene-based monomer, non-conjugated diene, and if needed, other monomers, (4) a ring opening-type norbornene-based (co)polymer and a (co)polymer obtained by hydrogenating, if needed, the ring opening-type norbornene-based (co)polymer, (5) a ring opening-type norbornene-based copolymer obtained by ring opening copolymerization reaction between the norbornene-based monomer and the ethylene or α-olefin and a copolymer obtained by hydrogenating, if needed, the ring opening-type norbornene-based copolymer, and (6) a ring opening-type norbornene-based copolymer obtained by ring opening copolymerization reaction between the norbornene-based monomer and the non-conjugated diene or other monomers and an norbornene-based copolymer obtained by hydrogenating, if needed, the ring opening-type norbornene-based copolymer, in addition to that, an acryl-based resin obtained by porimerizing a potocrosslinkable-reactive monomer and an epoxy resin.

It is particularly preferable to use the norbornene-based resin (polymer) among them. These norbornene-based polymer can be obtained using various kinds of well known polymerizations such as ring opening metathesis polymerization (ROMP), a combination of ROMP and hydrogenation, polymerization via radicals or cations, polymerization using a cationic palladium polymerization initiator and polymerization using other polymerization initiator than them (e.g., a nickel polymerization initiator or another transition metal polymerization initiator).

On the other hand, the cladding layers 11 and 12 make up the clad portions positioned below and above the core portions 14. This configuration allows core portions 14 to serve as a waveguide whose outer periphery is surrounded by the clad portions.

An average thickness of each of the clad layers 11 and 12 is preferably in the range of about 0.1 to 1.5 times with respect to an average thickness of the core layer 13, and more preferably in the range of about 0.3 to 1,25 times with respect to the average thickness of the core layer 13. Specifically, the average thickness of each of the clad layers 11 and 12 is not limited to a specific value, but, in general, is preferably in the range of about 1 to 200 μm, more preferably in the range of about 5 to 100 μm, and even more preferably in the range of about 10 to 60 μm. This enables the clad layers to reliably perform its function while preventing the optical waveguide 10 from being unnecessarily increased in a size (thickness).

Further, as a constituent material of each of the clad layers 11 and 12, it is possible to use, for example, the same material as the constituent material of the core layer 13 described above. In particular, it is preferable to use the norbornene-based polymer.

In this regard, in the present embodiment, it is possible to appropriately select different materials in light of the refractive index difference between the clad layers 11 and 12 and the core layer 13 and to use them as the constituent material of the clad layers 11 and 12 and the constituent material of the core layer 13. It is desirable if the materials thus selected are capable of generating the refractive index difference great enough to totally reflect light in boundaries between the core layer 13 and clad layers 11 and 12. This makes it possible to obtain a great enough refractive index difference in a thickness direction of the optical waveguide 10, thereby restraining light from being leaked from the core portions 14 to the clad layers 11 and 12. As a consequence, it is possible to suppress attenuation of light propagating through the core portions 14.

From the viewpoint of the suppression of light attenuation, it is preferable to enhance adhesions between the core layer 13 and the clad layers 1 and 1. Therefore, the constituent material of the clad layers 11 and 12 may be any material as long as it has a refractive index smaller than that of the constituent material of the core layer 13 and provides enhanced adhesion with respect to the constituent material of the core layer 13.

As the norbornene-based polymer having a relatively low refractive index, one including a norbornene repeating unit having substituted groups including an epoxy structure at end portions thereof is preferably used. Such a norbornene-based polymer has an especially low refractive index and exhibits great adhesion.

Further, a norbornene-based polymer including an alkyl norbornene repeating unit is also preferably used. Since the norbornene-based polymer including the alkyl norbornene repeating unit has high plasticity, use of such a norbornene-based polymer makes it possible to impart high flexibility to the optical waveguide 10.

Examples of an alkyl group included in the alkyl norbornene repeating unit include a propyl group, a butyl group, a pentyl group, a hexyl group, a heptyl group, an octyl group, a nonyl group, a decyl group and the like. Among them, it is especially preferred that the alkyl group is the hexyl group. In this regard, it is to be noted that these alkyl groups may be either a linear type or a branched type.

In the case where the norbornene-based polymer includes the hexyl norbornene repeating unit, it can prevent the refractive index thereof from being improved. Furthermore, since such a norbornene-based polymer including the

hexyl norbornene repeating unit has excellent permeability for the light having the wavelength region (especially, near 850 nm) as described above, it is preferably used.

In this regard, the constituent materials of the clad layer 11, the side clad portions 15 and the clad layer 12 may be identical (same kind) or different from each other, but it is preferred that these constituent materials have close refractive index to each other.

The use of such a optical waveguide 10 according to the present invention is particularly limited, but for example, preferably used to data communications which use light having a wavelength in the range of about 600 to 1550 nm, though the use is slightly different depending on optical performance of the constituent material of the core portions 14.

As described above, each of the side clad portions 15 is divided in the plurality of high refractive-index areas 151 and the low refractive-index area 152 of which refractive index is lower than that of the high refractive-index areas 151.

The optical waveguide 10 according to the present invention is characterized in that such high refractive-index areas 151 are included in a part of each of the clad portions.

Hereinafter, a detail description will be made on the high refractive-index areas 151 and the low refractive-index area 152 in each of the clad portions 15. The low refractive-index area 152 is provided in each of the side clad potions 15 so as to be in contact with the core portion(s) 14 as shown in FIG. 2. On the other hand, the high refractive-index areas 151 are provided in each of the side clad potions 15 so as not to be in directly contact with the core portion (s) 14 as shown in FIG. 2. In other words, the low refractive-index area 152 is provided between the high refractive-index areas 151 and the core portion(s) 14.

Furthermore, each of the plurality of high refractive-index areas 151 is formed in a strip shape in a planner view, wherein the plurality of high refractive-index areas 151 are arranged so that axis lines thereof become in parallel with each other. In this embodiment, the plurality of high refractive-index areas 151 shown in FIG.2 is formed in a parallelogram shape in the planner view. Furthermore, the plurality of high refractive-index areas 151 is arranged in each of the side clad portions 15 so as to sandwich the core portion 14 at both sides thereof, Furthermore, the plurality of high refractive-index areas 151 shown in FIG.2 is formed in an elongated parallelogram shape in the planner view. The length of the long side of each of the high refractive-index areas 151 is preferably in the range of about 2 to 50 times, and more preferably in the range of about 5 to 30 times with respect to the short side thereof.

Furthermore, the high refractive-index areas 151 having the strip shape are provided in each of the side clad portions 15 so as to across the side clad portion 15 in a wide direction thereof as shown in FIG.2. As a result, light passing through the side clad portion 15 passes the high refractive-index areas 151 by necessity, so that it is possible to reliably exhibit the functions of the high refractive-index areas 151 described later.

Each of the high refractive-index areas 151 having such a strip shape is provided so that the axis line thereof inclines to a back direction to the direction of travel of the light passing each of the core portions 14 with respect to a perpendicular line of an axis line of the core portion 14. By the provision of such an incline, when the light passing the high refractive-index areas 151 in each of the side clad portions 15 is incoming from the low refractive-index area 152 to the high refractive-index areas 151 and outgoing from the high refractive-index areas 151 to the low refractive-index area 152, the light is refractive so as to far away from the core portion 14 by necessity based on both the refractive index differences. Consequently, it is also possible to be far the light passing the side clad portion 15 away from the core portion 14. In the outgoing end surface 10b of the optical waveguide 10, it becomes possible to surely ensure a distance between an outgoing position of the light propagating the core portion 14 and an outgoing position of the light propagating the side clad portion 15.

In this case, an angle (inclined angle of the high refractive-index areas 151) $\theta$ between the perpendicular line to the axis line of the core portion 14 and the axis line of each of the high refractive-index areas 151 having the strip shape as shown in FIG. 2 is appropriately set so that the light passing the side clad portion 15 is necessarily and sufficiently refractive, depending on the refractive index difference between the high refractive-index areas 151 and the low refractive-index area 152, the width of the side clad portion 15, and the like.

More specifically, the inclined angle $\theta$ of the high refractive-index areas 151 is preferably in the range of about 10 to 85°, and more preferably in the range of about 20 to 70°. By setting the inclined angle $\theta$ to the above range, the light leaked from each of the core portions 14 is refractive so as to reliably far away from the core portion 14, thereby enabling the signal light to separate with the noise light in the outgoing end surface 10b of the optical waveguide 10. As a result, it is possible to reliably improve the S/N ratio as a carrier wave.

Further, the distance between the high refractive-index areas 151 is appropriately set to a predetermined distance, depending on the refractive index difference between the high refractive-index areas 151 and the low refractive-index area 152, the width of each of the side clad portion 15, and the like.

Furthermore, the width of each of the high refractive-index areas 151 is appropriately set the same manner as in the above distance. For example, the width is preferably in the range of about 1 to 30 $\mu$m, and more preferably in the range of 3 to 20 $\mu$m.

In this regard, the shape of each of the high refractive-index areas 151 is particularly not limited as long as it is formed in the strip shape (elongated shape). Example of the shape include: a quadrangular shape such as a trapezoidal

shape, a rectangle shape and a rhombus shape; a polygonal shape such as a pentagonal shape and hexagonal shape; a round shape such as an elliptical shape and an oval shape; and the like.

Here, a description will be made on a conventional optical waveguide.

FIG. 17 is a plan view showing only a core layer of a conventional optical waveguide.

A core layer 93 shown in FIG. 17 is configured by alternately arranging two core portions 94 provided in parallel with each other and three side clad portions 95. Furthermore, in order to irradiate light for communicating to such a core layer 93, light emitting elements 97 are provided to positions corresponding to the core portions 94 in the incoming side of the optical waveguide 90. In addition, light receiving elements 98 for receiving the signal light is provided to positions corresponding to the core portions 94 in the incoming side.

In such a core layer 93, since a refractive index of the side clad portions 95 are lower than that of the air, the light is totally reflected in interfacial surfaces between the side clad portions 95 and an outer space (air). Therefore, for any reason, the incoming light into the side clad portions 95 is propagated while repeating the total reflection at the interfacial surfaces between the side clad portions 95 and the air, thereby being outgoing the light from the outgoing end surface 90b. Therefore, a part of the light propagated from the side clad portions 95 reaches the light receiving elements 98 with the signal light which is propagated from the core portions 94. As a result, the light propagated from the side clad portions 95 is regarded as noises for the signal light and the S/N ratio as the carrier wave is lowered. Therefore, in the conventional optical waveguide 90, there are objects in that the S/N ratio as the carrier wave is improved and quality of the optical communications is improved.

Meanwhile, one of reasons why the light is incident into the side clad portions 95 is misalignments between an optical axis of the optical waveguide 90 and optical axes of the light emitting elements 97 and mismatches between a number of opening of the optical waveguide 90 and a number of opening of the light emitting elements 97. Inherently, it is preferred that optical axes of the core portions 94 correspond to the optical axes of the light emitting elements 97, and the number of opening of the optical waveguide 90 matches with the number of opening of the light emitting elements 97 so that all of the light emitted from the light emitting elements 97 are incident into the core portions 94. However, in the case where they are insufficient, a part of the light is incident to the side clad portions 95 positioned in the incoming end surface 90a of the optical waveguide 90. In addition to that, since a cross-section of each of the core portions 94 is minute, when the light emitting elements 97 are arranged, it is hard to correspond to the optical axes between the core portions 94 and the light emitting elements 97, respectively, and match the number of opening of the optical waveguide 90 with the number of opening of the light emitting elements 97.

Furthermore, in the case where not only there are misalignments between the optical axis of the optical waveguide 90 and the optical axes of the light receiving elements 98, but also the number of opening of the optical waveguide 90 mismatches with a number of opening of the light receiving elements 98, the light propagated from the side clad portions 95 reaches the light receiving elements 98. As a result, the S/N ratio as the carrier wave is lowered.

Furthermore, another reason why the light is incident into the side clad portions 95 is that the light is leaked from the core portions 94 to the side clad portions 95 on the way in the optical waveguide 90. The light leaked from the core portions 94 propagates through the side clad portions 95, so that the S/N ratio as the carrier wave is lowered as described above.

Therefore, in the present invention, as described above, the plurality of high refractive-index areas 151 having the refractive index higher than that of the one area (low refractive-index area 152) as described above are arranged and provided in the part of each of the side clad portions 95. By doing so, when the light propagating the side clad portions 15 of the optical waveguide 10 passes the high refractive-index areas 151, it is possible for the light to be refractive so as to far away from the core portions 14. In the outgoing end surface 10b of the optical waveguide 10, it is possible to reliably ensure distance between the outgoing positions of the light propagated from the core portions 14 and the outgoing positions of the light propagated from the side clad portions 15, Even if the light is incident into the side clad portions 15, the light can be refractive so as to far away from the core portions 14 by the high refractive-index areas 151.

Here, FIG. 3 is a view showing one example of passages of light propagating the core layer shown in FIG. 2. According to the present invention, as shown in FIG. 3, the light passing the side clad portions 15 (shown by the dashed arrows) is induced so as to far away from the core portions 14 without affecting the light which is emitted from the light emitting element 17 and passes the core portions 14 (shown by the solid arrows). As a result, in the outgoing end surface 10b, it is possible to arrange the outgoing positions 14L of the signal light propagated from the core portions 14 sufficiently apart from the outgoing positions 151L of the noise light propagated from the high refractive-index areas 151. Further, it is possible to suppress the noise light from being received to the light receiving elements 18, thereby preventing the S/N ratio as the carrier wave from being lowered.

As shown in FIG. 2, the high refractive1-index areas 151 are arranged apart from the core portions 14. If the high refractive-index areas 151 are in contact with the core portions 14, there is a fear that the light propagating the core parts 14 is branched from this contacting part to the side of the high refractive-index areas 151. However, by arranging the high refractive-index areas 151 apart from the core portions 14, it is possible to prevent the light propagating the

core portions 14 from being branched to the side of the high refractive-index areas 151.

It is preferred that the refractive index of such the high refractive-index areas 151 is higher than that of the one area of each of the side clad portions 15, namely the low refractive-index area 152. A refractive index difference therebetween is preferably 0.5% or more, and more preferably 0.8% or more . An upper limit value thereof may be not set to a specific value, but is preferably about 5.5%. By providing such a sufficient refractive index difference between the high refractive-index areas 151 and the low refractive-index area 152, it is possible to reliably reflect totally at the interfacial surfaces between each of the high refractive-index areas 151 and the low refractive-index area 152. As a result, it is possible to reliably prevent the light propagating the high refractive-index areas 151 from being leaked to the low refractive-index area 152 involuntarily.

Furthermore, it is preferred that the high refractive-index areas 151 are not exposed to the incoming end surface 10a. This makes it possible to suppress the light from propagating the high refractive-index areas 151 since the light is not directly incident to the high refractive-index areas 151. Consequently, it is possible to reliably exhibit the functions of the high refractive-index areas 151 as described above.

On the other hand, it is preferred that the high refractive-index areas 151 are not also exposed in the outgoing end surface 10b of the optical waveguide 10. If the high refractive-index areas 151 are exposed to the outgoing end surface 10b, there is a fear that the light having relatively high intensity are outgoing from exposed parts. If the high refractive-index areas 151 are not exposed to the outgoing end surface 10b, the high refractive-index areas 151 can exhibit the inherent functions reliably, so that it is possible to reliably improve the S/N ratio.

As shown in FIG. 2, it is preferred that each of the plurality of high refractive-index areas 151 is provided so as to distribute over the whole in a longitudinal direction thereof between the incoming end surface 10a and the outgoing end surface 10b of the optical waveguide 10. By doing so, it is possible to reliably be far not only the incoming light from the incoming end surface 10a to the side clad portions 15 but also the light leaked from the core portions 14 to the side clad portions 15 on the way to the optical waveguide 10 away from the core portions 14.

Furthermore, as shown in FIG. 2, in the case where there is the plurality of core portions 14 and 14 (multichannel), if the high refractive-index areas 151 are provided as described above, it is possible to suppress the noise light from being received to other light receiving elements than the light receiving elements corresponding to the core portions 14 and 14, respectively. In other words, it is possible to efficiently suppress the signal light from being leaked (crosstalk) from other channels.

In this case, an inclined direction of each of the high refractive-index areas 151 provided in the side clad portion 15 between the adjacent core portions 14 and 14 may be determined with reference to the closest core portions 14. Therefore, each of the high refractive-index areas 151 arranged between the core portions 14 and 14 in paralleled with each other as shown in FIG. 2 is arranged in a V-shaped manner by necessity.

FIG. 9 is a view showing another configuration example of the first embodiment shown in FIG. 2.

An optical waveguide 10 shown in FIG. 9 is the same as that shown in FIG. 2, except that the shape of the high refractive-index areas having the strip shape in the planner view is different from that of the first embodiment. In other words, although each of side clad portions 15 shown in FIG. 9 has a plurality of high refractive-index portions 151' having a strip shape in the planner view, the plurality of high refractive-index portions 151' has an elongated triangle shape in the planner view.

Such high refractive-index areas 151' are provided so that axis lines thereof are inclined to a back direction in a direction of travel of the light passing each of the core portions 14 with respect to a perpendicular line of an axis line of the core portion 14 like the high refractive-index portions 151 shown in FIG. 2.

As the high refractive-index areas 151' are far away from the core portions 14, each of the high refractive-index areas 151' have a shape so that a cross-section area thereof is increased gradually. Each of the high refractive-index areas 151' having such a shape can more effectively attenuate the light passing the side clad portions 15. As a result, it is possible to further improve the S/N ratio as the carrier wave.

In each of the plurality of high refractive-index, areas 151' having the elongated triangle shape in the planner view as shown in FIG. 9, an internal angle positioned to the side of the core portion 14 is an acute angle and lower than other internal angles. Specifically, the internal angle positioned to the side of the core portion 14 is preferably in the range of about 3 to 30°, and more preferably in the range of about 5 to 20°.

In this case, the length of the side opposite to the internal angle positioned to the side of the core portion 14 becomes shorter than those of other two sides. Specifically, the length of the side opposite to the internal angle positioned to the side of the core portion 14 is in the range of about 0.02 to 0.5 times, and more preferably in the range of about 0.03 to 0.2 times with respect to the length of a shorter side in the other two sides.

Furthermore, FIG. 10 is a view shoving the other configuration example of the first embodiment shown in FIG. 2.

An optical waveguide 10 shown in FIG. 10 is the same as that shown in FIG. 2, except that the shape of each of the high refractive-index areas having the strip shape in the planner view is different from that of the first embodiment. In other words, although each of side clad portions 15 shown in FIG. 10 has a plurality of high refractive-index portions 15'' having a strip shape in the planner view, each of the plurality of high refractive-index portions 151" has an elongated

rectangle shape in the planner view and is arranged so that an extended line of an axis line thereof is substantially perpendicular to an axis line of the core portion 14.

Each of the high refractive-index porti.ons 151" as shown in FIG. 10 have the elongated rectangle shape. The length of the long sides thereof is preferably in the range of about 2 to 50 times, and more preferably in the range of about 5 to 30 times with respect to the length of the short sides thereof.

Since such a plurality of high refractive-index portions 151" is refractive or scattered effectively so as to be far the light propagating the side clad portions 15 away from the core portions 14, it is possible to efficiently attenuate the light passing the side clad portions 15. Consequently, it is possible to reliably improve the S/N ratio as the carrier wave.

These high refractive-index portions 151' and high refractive-index portions 151" exhibit the same functions as those of the high refractive-index portions 151 described above.

Next, a description will be made on one example of a method of manufacturing the optical waveguide 10. The optical waveguide 10 are manufactured by producing each of the clad layer 11 (first layer), the core layer 13 (second layer) and the clad layer 12 (third layer) and laminating them.

In this manufacturing method, it is necessary to manufacture the optical waveguide 10 so as to be parts having different reflective indexes in contact with each ether physically and optically. Concretely, it is necessary to manufacture the optical waveguide 10 so as to allow the low reflective-index areas 152 and the clad layers 11 and 12 to reliably adhere to the core portions 14 without gaps therealong. In addition, it is necessary to allow the high reflective-index areas 151, the low reflective-index areas 152 and the clad layers 11 and 12 to reliably adhere to each other therealong.

A concrete manufacturing method are not particularly limited as long as the core portions 14, the high reflective-index areas 151, the low reflective-index areas 152 and the like can be produced in the same layer (second layer). Examples of the concrete manufacturing method include, for example, a photobleaching method, a photolithography method, a direct exposing method, a nanoimprinting method, a monomerdiffusion method and the like.

In this embodiment, as a representative, a description will be made on a method of manufacturing the optical waveguide 10 using the monomerdiffusion method.

FIGs. 4 to 8 are a sectional view schematically showing process examples of a method of manufacturing the optical waveguide 10 shown in FIG. 1. In this regard, it is to be noted that FIGs. 5, 6 and 8 are the sectional view in an A-A line shown in FIG. 2.

[1] First, a layer 110 is formed on a supporting substrate 161 (see FIG. 4) . The layer 110 is formed by applying a core layer forming material (varnish) 100 onto the supporting substrate 161, and then curing (hardening) the same.

Specifically, the layer 110 is formed by applying the core layer forming material 100 onto the supporting substrate 1611 to form a liquid coating thereon, and then placing the supporting substrate 161 on which the liquid coating has been formed on a level table under a ventilatory state to thereby evaporate (desolvate) a solvent contained in the liquid coating therefrom while leveling uneven portions existing on a surface thereof.

In the case where the layer 110 is formed using an application method, examples of the application method include a doctor blade method, a spin coating method, a dipping method, a table coating method, a spraying method, an applicator method, a curtain coating method, a die coating method and the like. However, the application method is not limited thereto.

As the supporting substrate 161, for example, a silicon substrate, a silicon dioxide substrate, a glass substrate, a quartz substrate, a polyethylene terephthalate (PET) film and the like can be used.

The core layer forming material 100 is a material containing a developable material formed of a polymer 115 and an additive 120 (including at least a monomer and a catalyst). When the material is irradiated by active radiation and heated, a reaction of the monomer occurs in the polymer 115

In the obtained layer 110, the polymer (matrix) 115 are substantially uniformly distributed in a random order, and in the polymer 115, the additive 120 are substantially uniformly dispersed in a random order. As a result, in the layer 110, the additive 120 are substantially uniformly dispersed in a random order.

An average thickness of such a layer 110 is appropriately set depending on a thickness of the core layer 13 to be formed. The average thickness is not particularly limited to a specific value, but is preferably in the range of about 5 to 200 μm, more preferably in the range of about 10 to 100 μm, and even more preferably in the range of about 15 to 65 μm.

It is preferable to use the polymer 115 having sufficiently high transparency (being transparent and colorless) and compatibility with the monomer which will be described bellow. In addition, it is also preferable to use the polymer 115 in which the monomer can be reacted (polymerized or cross-linked) as described below, and that can maintain the sufficiently high transparency even after the monomer are polymerised.

In this regard, the expression "having compatibility" means that the monomer can be at least blended with the polymer 115 so as to cause no phase separation between the monomer and the polymer 115 in the core layer forming material 100 and the layer 110.

Examples of such a polymer 115 include the constituent material of the core layer 13 described above. In the case where a norbornene-based polymer is used as the polymer 115, since the norbornene-based polymer has a high hydrophobic property, it is possible to obtain a core layer 93 whose dimensional change hardly occurs due to water

absorption thereof.

Furthermore, the norbornene-based polymer may be either a homopolymer including a single repeating unit or a copolymer including two or more kinds of repeating unit.

Among therm, a compound having the repeating units represented by the following formula (1) is preferably used as one example of the copolymer.

Formula (1)

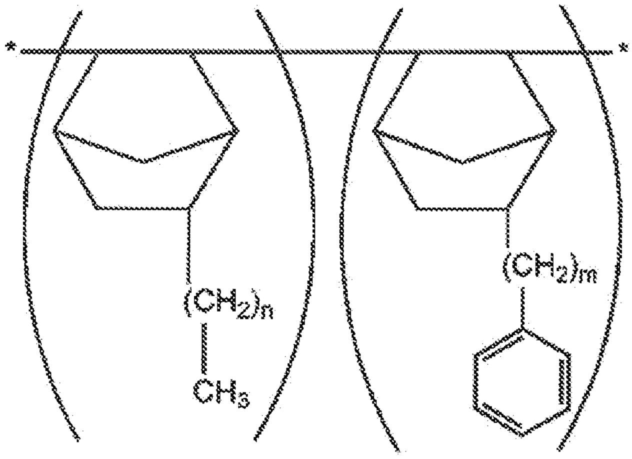

(1)

where the "m" represents an integer in the range of 1 to 4 and the "n" represents an integer in the range of 1 to 9.

Either a polymer in which the two repeating units in the above formula (1) are arranged in an arbitrary order (in a random manner), a polymer in which the two repeating units in the above formula (1) are arranged alternately, or a polymer in which two or more of each of the two repeating units are arranged in a block manner may be used as a kind of copolymer.

In the case where the norbornene--based polymer is used as the polymer 115, it is preferred that one including the norbornene-based monomer, a cocatalyst (first substance) and a procatalyst (second substance) is selected as the additive 120.

The norbornene-based monomer are reacted within irradiated regions of the layer 110 which is irradiated with the activated radiation described later to produce a reaction product. As a result, a refractive index difference between the irradiated regions of the layer 110 and non-irradiated regions thereof which is not irradiated with the activated radiation is caused due to existence of the reaction product.

In this regard, the reaction product contains at least one kind selected from the group comprising a polymer obtained by polymerizing the norbornene-based monomer in the polymer (matrix) 115, a polymer having cross-linking chemical structures obtained by cross-linking the polymer 115, and a polymer having branching chemical structures (branch polymer or side chains (pendant groups)) obtained by branching the polymer 115.

In the case where it is required that the refractive index of each of the irradiated regions of the layer 110 becomes high, the polymer 115 having a relatively low refractive index is used in combination with a norbornene-based monomer having a refractive index higher than that of the polymer 115. On the other hand, in the case where it is required that the refractive index of each of the irradiated regions of the layer 110 becomes low, the polymer 115 having a relatively high refractive index is used in combination with the norbornene-based monomer having a refractive index lower than that of the polymer 115.

In this regard, it is to be noted that the term "high" or "low" for the refractive index does not mean an absolute value of the refractive index, but means a relative relation between refractive indexes of two certain materials.

In the case where the refractive index of each of the irradiated regions of the layer 110 is lowered due to the reaction of the norbornene-based monomer (production of the reaction product), each of the irradiated regions becomes the side clad portion 15. On the other hand, in the case where the refractive index of each of the irradiated regions of the layer 10 is increased due to the reaction of the norbornene-based monomer, each of the irradiated regions becomes the core portion 14.

The procatalyst (second substance) is a substance that can initiate the reaction (e.g., polymerization reaction, cross-linking reaction or the live) of the monomer, the substance whose activation temperature is changed under the action of an activated cocatalyst (first substance) by being irradiated with the activated radiation described below.

Any substance whose activation temperature is changed (raised or lowered) according to the irradiation of the activated radiation can be used as the procatalyst, but a substance whose activation temperature is lowered according to the irradiation of the activated radiation is especially preferably used. This makes it possible to form the core layer 93 (optical waveguide 10) by carrying out a heat treatment at a relatively low temperature. Further, it is also possible to prevent layers other than the core layer 93 from being heated unnecessarily. As a result, lowering of the property (optical transmission property) of the optical waveguide 10 can be prevented.

It is preferable to use the procatalyst containing (mainly constituted of) at least one of compounds represented by the following formulae (Ia) and (Ib).

$$(E(R)_3)_2Pd(Q)_2 \qquad (Ia)$$

$$[(E(R)_3)_2Pd(Q)(LB)_b]_p[WCA]_r \qquad (Ib)$$

where in each of the formulae (Ia) and (Ib), $E(R)_3$ is a Group 15 neutral electron donor ligand, E is an element selected from the group comprising elements of Group 15 of the Periodic Table, and R is one of a hydrogen atom (or an isotope thereof) and a hydrocarbon group-containing moiety, Q is an anionic ligand selected from the group comprising carboxylate, thiocarboxylate and dithiocarbonylate. Further, in the formula (Ib), LB is a Lewis base, WCA is a weakly coordinating anion, "a" is an integer of 1 to 3, "b" is an integer of 0 to 2, a total number of "a" and "b" is 1 to 3, and "p" and "r" are integers for maintaining balance between an electronic charge of a palladium cation and an electronic charge of the weakly coordinating anion.

Examples of an exemplary procatalyst in accordance with the formula (Ia) include $Pd(OAc)_2(P(i\text{-}Pr)_3)_2$, $Pd(OAc)_2(P(Cy)_3)_2$, $Pd(O_2CCMe_3)_2(P(Cy)_3)_2$, $Pd(OAc)_2P(Cp)_3)_2$, $Pd(O_2CCF_3)_2(P(Cy)_3)_2$ and $Pd(O_2CC_6H_5)_3(P(Cy)_3)_2$, where Cp is a cyclopentyl group and Cy is a cyclohexyl group, but the exemplary procatalyst is not limited thereto.

Further, a procatalyst containing compounds represented by the formula (Ib), in which each of "p" and "q" is selected from an integer of 1 or 2, is preferably used.

Examples of an exemplary procatalyst in accordance with the formula (Ib) include $Pd(OAc)_2(P(Cy)_3)_2$, where Cy is a cyclohexyl group and Ac is an acetyl group.

Use of these procatalysts makes it possible to effectively react the monomer. In the case where the monomer is the norbornene-based monomer, the use thereof makes it possible to effectively polymerize or cross-linking react the monomer via an addition polymerization reaction.

The cocatalyst (first substance) is a substance that is activated by being irradiated with the activated radiation and can change the activation temperature of the procatalyst (that is, a polymerization initiation temperature of the monomers).

As such a cocatalyst, any substance can be used as long as it is activated due to change (reaction or cleavage) of a chemical structure thereof by being irradiated with the activated radiation. The cocatalyst (photoinitiator) containing (mainly consisted of) compounds that are cleaved by being irradiated with activated radiation having a predetermined wavelength so that they produce cations such as protons or other positive ions and weakly coordinating anions (hereinafter, referred to as "WCA"s) can be preferably used. In this regard, each of the weakly coordinating anions can substitute for a cleavable group included in the procatalyst.

Examples of the weakly coordinating anion include a tetrakis (pentafluorophenyl) boric acid ion (hereinafter, referred to as "FABA-"), a hexafluoro antimonic acid ion (hereinafter, referred to as "$SbF_6^-$") and the like.

Examples of the cocatalyst (photo acid generator or photo base generator) include tetrakis (pentafluorophenyl) gallate, aluminates, antimonates, other borates, other gallates, carborane and halocarboranes in addition to tetrakis (pentafluorophenyl) borate and hexafluoro antimonate.

Further, the core layer forming material 100 may contain a sensitizing agent, if needed.

Furthermore, the core layer forming material 100 may contain an anti-oxidizing agent. This makes it possible to prevent generation of undesirable free radicals and/or natural oxidation of the polymer 115. As a result, it is possible to improve properties of the obtained core layer 13 (optical waveguide 10).

In this way, the layer 110 is formed on the supporting substrate 161 by using the core layer forming material 100 At this time, the layer 110 has a first refractive index. This first refractive index is obtained under the actions of the polymer 115 and the monomer dispersed (distributed) uniformly in the layer 110.

Furthermore, in the descriptions of the above additive 120, the description was made on the example of the case of the norbornene-based monomer as the monomer. However, other monomers than the norbornene-based monomer may be used as long as they have polymerizable parts. Examples of such other monomers include an acrylic acid (methacrylic acid)-based monomer, an epoxy-based monomer, a styrene-based monomer and the like. These monomers can be used singly or in combination of two or more of them.

The catalyst in the additive 120 may be appropriately selected according to the kind of monomer. In the case

where the monomer is the acrylic acid-based monomer or the epoxy-based monomer, the addition of the procatalyst (second substance) can be omitted.

[2] Next, as shown in FIG. 5, a mask (masking) 135 provided with openings (windows) 1351 is prepared, and then the layer 110 is irradiated with the activated radiation (activated energy beam) 130 through the mask 135.

Hereinafter, a description will be made on a case that monomer having a refractive index lower than that of the polymer 115 is used and a refractive index of the core layer forming material 100 is lowered in the irradiated regions 125 which have been irradiated with the activated radiation 130.

Namely, in this case, the irradiated regions 125 which have been irradiated with the activated radiation 130 become the low refractive-index area 152 in each of the side clad portions 15.

Therefore, in this case, the mask 135 has openings (windows) 1351 having a pattern corresponding to those of the low refractive-index areas 152 to be formed. These openings 1351 define a transmission portion through which the activated radiation 130 to be used for irradiating is passed.

The mask 135 may be either a mask which has been made in advance (independently) such as a mask having a plate shape or a mask which is formed on the layer 110 using, for example, a vapor phase deposition method or an application method.

The activated radiation 130 to be used has only to be able to cause an optical reaction (change) of the cocatalyst. For example, an electron ray, an X ray or the like can be used in addition to a visible light, an UV light, an infrared light and a laser beam.

When the layer 110 is irradiated with the activated radiation 130 through the mask 135, the cocatalyst (first substance) existing within the irradiated regions 125 which have been irradiated with the activated radiation 130 are reacted (bonded) or cleaved under the action of the activated radiation 130, to thereby extricating (producing) the cations (protons or other positive ions) and the weakly coordinating anions (WCAs).

At this time, the cations or the weakly coordinating anions change (cleave) chemical structures of the procatalyst (second substrate) existing within the irradiated regions 125. As a result, the procatalyst is brought into the active but latent state (latent active state).

In this regard, it is to be noted that in the case where light having high directivity such as the laser beam is used as the activated radiation 130, the use of the mask 135 may be omitted.

[3] Next, the layer 110 is subjected to a heat treatment (first heat treatment). At this time, the procatalyst in the active but latent state is activated (brought into an active state) within the irradiated regions 125, as a result of which the monomer is reacted (polymerized or cross-linked).

When the reaction of the monomer progresses within the irradiated regions 125, a concentration of the monomer therein is gradually lowered. In this way, a difference between the concentration of the monomer in the irradiated regions 125 and a concentration of the monomer in the non-irradiated regions 140 is caused. In order to eliminate the difference, the monomer contained in the non-irradiated regions 140 is diffused and assembled to the irradiated regions 125. This phenomenon is referred to as "monomer diffusion".

As a result, the monomer and/or a reaction product thereof (polymeric molecules, and products having cross-linking chemical structures or branching chemical structures) are increased within the irradiated regions 125. Chemical structures derived from the monomer remarkably have an effect on the refractive index of the irradiated regions 125 so that it is lowered up to a second refractive index lower than the first refractive index. In this case, addition-type (co) polymer is mainly produced as the polymer of the monomer.

On the other hand, since the monomer is diffused from the non-irradiated regions 140 to each of the irradiated regions 125, an amount of the monomer contained in the non-irradiated regions 140 is lowered. The polymer 115 remarkably has an effect on the refractive index of the non-irradiated regions 140 so that it is increased up to a third refractive index higher than the first refractive index.

In this way, a refractive index difference between the irradiated regions 125 and the non-irradiated regions 140 (second refractive index third refractive index) is caused. As a result, the core portions 14, the high refractive-index areas 151 (non-irradiate regions 140) and the low refractive-index areas 152 (irradiated regions 125) are formed as shown in FIG. 6.

[4] Next, the layer 110 is subjected to a second heat treatment. By doing so, the procatalyst remaining in the irradiated regions 125 and/or the non-irradiated regions 140 is activated (brought into the active state) directly or via the activation of the cocatalyst. As a result, the monomer remaining in each of the irradiated and non-irradiated regions 125 and 140 are reacted.

In this way, by reacting the monomer remaining in each of the irradiated and non-irradiated regions 125 and 140, it is possible to stabilize the obtained core portions 14, the high refractive-index areas 151 and the low refractive-index areas 152.

[5] Next, the layer 110 is subjected to a third heat treatment. This makes it possible to reduce internal stress which would occur in the obtained core layer 13 and to further stabilize the core portions 14, the high refractive-index areas 151 and the low refractive-index areas 152.

Through the above steps, the core layer 13 (second layer) is obtained.
In this regard, it is to be noted that in the case where the refractive index differences between the core portions 14 and the high refractive-index areas 151 and between the core portions 14 and the low refractive-index areas 152 are sufficiently caused before the layer 110 is subjected to the second heat treatment and/or the third heat treatment, this step [5] and/or the above step [4] may be omitted.

[6] Next, as shown in FIG. 7, the clad layer 11 (12) is formed on the supporting substrate 162.

Examples of a forming method of the clad layer 11 (12) include various methods such as a method in which a vanish containing a clad material (cladding layer forming material) is applied onto the supporting substrate 162 and the same is cured (hardened) and a method in which a monomer composition having a curing property is applied onto the supporting substrate 162 and the same is cured (hardened).

In the case where the clad layer 11 (12) is formed using an application method, examples of the application method include a spin coating method, a dipping method, a table coating method, a spraying method, an applicator method, a curtain coating method, a die coating method and the like.

As the supporting substrate 162, the same one as the supporting substrate 161 can be used.
In this way, the clad layer 11 (12) is formed on the supporting substrate 162.

[7] Next, as shown in FIG. 8, the core layer 13 is peeled off from the supporting substrate 161, and then it is put between the clad layer 11 (first layer) formed on the supporting substrate 162 and the clad layer 12 (third layer) formed on the supporting substrate 162.

Thereafter, as shown using arrows in FIG. 8, the supporting substrate 162 is compressed from an upper surface side of the supporting substrate 162 on which the clad layer 12 is formed, so that the clad layers 11 and 12 and the core layer 13 are bonded together.

In this way, the clad layers 11 and 12 (first layer and third layer) and the core layer 13 (second layer) are bonded and unified.

It is preferred that this compressing operation is carried out with being heated. A heating temperature is appropriately selected depending on the constitute materials of the clad layers 11 and 12 and the core layer 13 or the like, but is, in general, preferably in the range of about 80 to 200°C, and more preferably in the range of about 120 to 130°C.

Next, the supporting substrates 162 are peeled off and removed from the clad layers 11 and 12, respectively. In this way, the optical waveguide 10 (optical waveguide according to the present invention) is obtained.

According to the above method, it is possible to form the core portions 14 and the high refractive-index areas 151 simultaneously in the same manufacturing process. Therefore, it is possible to efficiently produce the high refractive-index areas 151 and the low refractive-index areas 152 without increasing a number of process to a conventional manufacturing method.

The core portions 14 and the high refractive-index areas 151 produced in this way are constituted of the same kind of material. Therefore, a coefficient of thermal expansion of the material of the core portions 14 is equal to a coefficient thermal expansion of the material in the high refractive-index areas 151. It is possible to reduce defects such as reformation of the optical waveguide 10 according to the temperature change, the peeling between layers and the like as compared with a case of constituting them of the different material to each other.

As described above, the description has been made on the method of manufacturing the optical waveguide 10 according to the monomerdiffusion method. However, as described above, the other methods as described above may be used as the method of manufacturing the optical waveguide 10.

Among them, in the photbleaching method, for example, used is the core layer forming material containing a cleaving agent (a substance) that is activated by being irradiated with activated radiation, and a polymer that includes a main chain and cleavable groups (cleavable pendant groups) branching from the main chain and having a chemical structure in which at least a part of the chemical structure can be cleaved and removed from the main chain under action of the activated cleaving agent. After the core layer forming material is applied onto the supporting substrate in a layer manner, the cleavable groups are cleaved (cut) by irradiating the activated radiation such as ultraviolet ray to the part of the layer, thereby changing (improving or lowering) the refractive index of the part. For example, if the refractive index is lowered according to the cleavage of the cleavable groups, areas irradiated with activated radiation become the low refractive-index areas 152 and other areas become the core portions 14 or the high refractive index areas 151. After the core layer 13 is formed in this way, the clad layers 11 and 12 are bonded to both surfaces of the core layer 13 as described above.

On the other hand, in the photolithography method, for example, a layer of the core portion forming material having the high refractive index is applied to the clad layer 11, and further the core portions 14 and a resist film having a shape corresponding to the high refractive-index areas 151 are formed on the layer by the photolithography technology. Then, the resist film is used as a mask, thereby etching the layer of core portion forming material. By doing so, the core portions 14 and the high refractive-index areas 152 are obtained. Thereafter, a clad portion forming material having a relatively low refractive index is applied onto them so as to cover the core portions 14 and the high refractive-index areas 152. Consequently, gaps between the core portions 14 and the high refractive-index areas 151 are filled with the clad

portion forming material to obtain the low refractive index areas 151. Furthermore, the clad portion forming material is applied onto them (the core portions 14, the high refractive-index areas 152 and the low refractive-index areas 151) so as to cover them, so that the clad layer 12 is obtained.

<Second Embodiment>

Next, a description will be made on a second embodiment of the optical waveguide according to the present invention.

FIG. 11 is a plan view showing only a core layer of a second embodiment of the optical waveguide according to the present invention.

Hereinafter, the description will be made on the optical waveguide according to this embodiment, however the optical waveguide will be described with emphasis placed on points differing from the optical waveguide according to the first embodiment. No description will be made on the same points.

The optical waveguide according to this embodiment is the same as that of the first embodiment, except that patterns of the high refractive-index areas and the low refractive-index areas are different from those of the first embodiment in the planner view.

Each of side clad portions 15 shown in FIG. 11 has a plurality of high refractive-index areas 153 having a particle shape in the planner view.

The plurality of high refractive-index areas 153 has a higher refractive index than low refractive-index areas 152, which is the same as the high refractive-index areas 151 described in the first embodiment. Further, the plurality of high refractive index areas 153 is arranged to both sides of each of the core portions 14 so as to sandwich it.

Furthermore, each of the plurality of high refractive-index areas 153 is independent to each other and is provided so as not to be in directly contact with the core portions 14. In other words, the low refractive-index areas 152 are provided between the high refractive index areas 153 and the core portions 14, respectively.

It is preferred that the refractive index of such the high refractive-index areas 153 is higher than that of other areas of each of the side clad portions 15, namely the low refractive-index area 152. A refractive index difference between the high refractive-index areas 153 and the low refractive-index area 152 is preferably 0.5% or more, and more preferably 0.8% or more. An upper limit value thereof may be not set to a specific value, but is preferably about 5.5%. By setting sufficiently such a refractive index difference between the high refractive-index areas 153 and the low refractive-index area 152, it is possible to reliably reflect totally at the interfacial surfaces between each of the high refractive-index areas 153 and the low refractive-index area 152. As a result, it is possible to reliably prevent the light propagating the high refractive-index areas 153 from being leaked to the low refractive-index area 152 involuntarily.

Furthermore, it is preferred that the high refractive-index areas 153 is not exposed to the incoming end surface 10a. This makes it possible to suppress the light from propagating in the high refractive-index areas 153 since the light is not directly incident to the high refractive-index areas 153. Consequently, it is possible to reliably exhibit the functions of the high refractive-index areas 153 as described above.

On the other hand, it is preferred that the high refractive-index areas 153 are not also exposed in the outgoing end surface 10b of the optical waveguide 10. If the high refractive-index areas 153 are exposed to the outgoing end surface 10b, there is a fear that the light having relatively high intensity is outgoing from the exposed parts. If the high refractive-index areas 153 are not exposed to the outgoing end surface 10b, the high refractive-index areas 153 can exhibit the inherent functions reliably, so that it is possible to reliably improve the S/N ratio.

As shown in FIG. 11, it is preferred that the high refractive-index areas 153 are provided so as to distribute over the whole in a longitudinal direction thereof between the incoming end surface 10a and the outgoing end surface 10b of the optical waveguide 10. By doing so, it is possible to reliably be far not only the incident light from the incoming end surface 10a to the side clad portions 15 but also the light leaked from the core portions 14 to the side clad portions 15 on the way to the optical waveguide 10 away from the core portions 14.

Furthermore, as shown in FIG. 11, in the case where there is the plurality of core portions 14 and 14 (multichannel), if the high refractive-index areas 153 are provided as described above, it is possible to suppress the noise light from being received to other light receiving elements than the light receiving elements corresponding to the core portions 14 and 14, respectively. In other words, it is possible to efficiently suppress the signal light from being leaked (crosstalk) from other channels.

In the optical waveguide 10 according to such a present embodiment, when light leaked from the core portions 14 to the side clad portions 15 (low refractive index areas 152) reaches the high refractive-index areas 153 on the way of propagating the incident light from the incoming end surface 10a to the outgoing end surface 10b, the light is scattered ununiformly threin. Consequently, the light leaked from the core portions 14 to the side clad portions 15 (low refractive index areas 152) spreads over a wide range before the light reaches the outgoing end surface 10b, so that the light is attenuated. As a result, intensity of the noise light output from the side clad portions 15 is lowered in the outgoing end surface 10b and therefore it is possible to improve the S/N ratio as the carrier wave.

The shape of each of the high refractive-index areas 153 having the particle shape in the planner view is particularly not limited. Examples of the shape include: a round shape such as a true circle, an elliptical shape and an oval shape; a polygonal shape such as a triangle shape, a quadrangle shape, hexagonal shape, an octagon shape and a star shape; a semicircular shape; a fan shape; and the like.

It is preferred that the high refractive-index areas 153 are formed with irregularities on its outer surfaces as shown in FIG. 11. In the high refractive-index areas 153, portions which receive the light leaked from the core portions 14 have the irregularities, so that it is possible to diffusely reflect the light reliably.

An average size of each of the high refractive-index areas 153 in the planner view is preferably in the range of about 10 to 500 $\mu$m, and more preferably in the range of about 20 to 300 $\mu$m. By setting the average size of each of the high refractive-index areas 153 within the above range, it is possible to sufficiently improve odds which the high refractive-index areas 153 scatter the light.

In this regard, a refractive index difference between the high refractive-index areas 153 and the low refractive-index areas 152 is preferably 0.5% or more, and more preferably 0.8% or more. An upper limit value thereof may be not set to a specific value, but is preferably about 5.5%.

Here, FIG. 12 is a view showing another configuration example of the second embodiment shown in FIG. 11. An optical waveguide 10 shown in FIG. 12 is the same as that shown in FIG. 11, except that an arrangement pattern of the plurality of the high refractive-index areas 153 is different from that of the optical waveguide described above. In other words, although the plurality of the high refractive-index areas 153 shown in FIG. 11 is aligned and arranged, a plurality of the high refractive-index areas 153 shown in FIG. 12 is irregularly (random) arranged. This makes it possible to suppress the light scattered in the plurality of the high refractive-index areas 153 from being interfered when the light passing each of the side clad portions 15 is scattered in the high refractive-index areas 153.

While the optical waveguide of the present invention has been described hereinabove with reference to the embodiments shown in the drawings, the present invention is not limited thereto. The configurations of the respective parts may be substituted by or added with other arbitrary configurations having the equivalent functions.

Further, the optical waveguide of the present invention may be manufactured by combining the parts of the first embodiment with the parts of the second embodiment in the parts of respective embodiments.

Furthermore, a number of core portions 14 may be one, three or more, though two core portions 14 are provided in the core layer 13 in the respective embodiments.

Furthermore, the high refractive-index areas 151 and 153 may be provided in the clad layers 11 and 12, though the high refractive-index areas 151 and 153 are provided in each of the side clad portions 15 in the respective embodiments.

The optical waveguide of the present invention can find its application in, e.g., optical wiring lines for optical communication.

Similarly, an optical/electrical combination substrate can be produced by mounting the optical wiring line provided with the optical waveguide of the present invention (that is, the optical wiring line of the present invention) on a substrate together with a conventional electrical wiring line. In such an optical/electrical combination substrate (the optical/electrical combination substrate of the present invention), optical signals transmitted through the optical wiring line (the core portions of the optical waveguide) are converted to electrical signals by a photoelectric conversion device, and then the electrical signals are transferred to the electrical wiring line. The optical wiring line can transfer information in a lager volume and at a higher speed than a conventional electrical wiring line. Accordingly, if the optical/electrical combination substrate is applied to, e.g., a bus interconnecting an operation device such as a CPU or an LSI and a storage device such as a RAM, it becomes possible to enhance overall system performance and to suppress generation of electromagnetic noises.

In this regard, it is thinkable to mount the optical/electrical combination substrate to electronic devices for transferring a large volume of data at a high speed, such as cellular phones, game machines, personal computers, television sets and home servers. The electronic device provided with the optical/electrical combination substrate (the electronic device of the present invention) is superior in an internal information processing speed and can deliver high performance.

## EXAMPLES

Hereinafter, a description will be made on concrete examples of the present invention.

1. Manufacture of Optical Waveguide

(Example 1)

First of all, prepared was a core layer forming material containing a norbornene-based polymer having repeating

units represented by the following formula (2).

Formula (2)

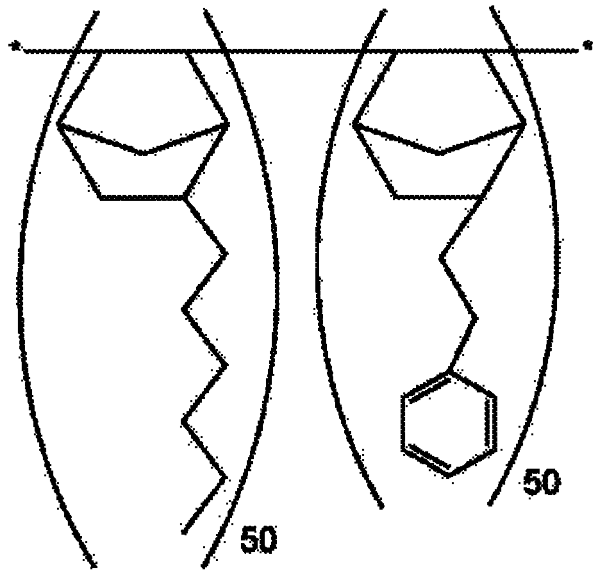

(2)

Next, the core layer forming material was applied onto a substrate to form a liquid coating. Next, the liquid coating was dried to obtain a layer of the core layer forming material.

Next, ultraviolet ray was irradiated to the layer through a mask having openings (windows) corresponding to low refractive-index areas to be formed. Then, the layer was heated in an oven . As a result, regions of the layer in which the ultraviolet ray was irradiated became the low refractive-index areas (refractive index: 1.54), regions of the layer in which the ultraviolet ray was not irradiated became core portions (refractive index: 1.55) and high refractive-index areas (refractive index: 1.55). In this way, a core layer was obtained. In this regard, it is to be noted that a shape of each of the core portions, the high refractive-index areas and the low refractive-index areas was the shape shown in FIG. 2. An inclined angle to a perpendicular line of an axis line of the core portion of each of the high refractive-index areas as shown in FIG. 2 was 45°.

Next, prepared was a norbornene-based polymer having a refractive index lower than that of the polymer used for the core layer forming material. Then, prepared was a clad layer forming material containing the norbornene-based polymer.

Next, the clad layer forming material was applied onto two substrates to obtain liquid coatings. Next, the liquid coatings were dried to obtain clad layers.

Next, the clad layers were attached to both surfaces of the obtained core layer to obtain an optical waveguide.

(Example 2)

An optical waveguide was manufactured in the same manner as in the Example 1, except that the shape of each of the core portions, the high refractive-index areas and the low refractive-index areas was set to the shape shown in FIG. 9.

In this regard, it is to be noted that an inclined angle to the perpendicular line of the axis line of the core portion of each of the high refractive-index areas 151' in FIG. 9 was set to 45°. An internal angle of each of the high refractive-index areas 151' positioned to the side of the core portion 14 was set to 10°.

(Example 3)

An optical waveguide was manufactured in the same manner as in the Example 1, except that the shape of each of the core portions, the high refractive-index areas and the low refractive-index areas was set to the shape shown in FIG. 10.
In this regard, an aspect ratio of the high refractive-index areas 151'' in FIG. 10 was set to 1:20.

(Example 4)

An optical waveguide was manufactured in the same manner as in the Example 1, except that the shape of each of the core portions, the high refractive-index areas and the low refractive-index areas was set to the shape shown in FIG. 11.
In this regard, an average size of each of the high refractive-index areas 153 in FIG. 11 was set to 1 μm.

(Example 5)

An optical waveguide was manufactured in the same manner as in the Example 1, except that the shape of each of the core portions, the high refractive-index areas and the low refractive-index areas was set to the shape shown in FIG. 12.
In this regard, an average size of the high refractive-index areas 153 in FIG. 12 was set to 1 μm.

(Comparative Example)

An optical waveguide was manufactured in the same manner as in the Example 1, except that the productions of the high refractive-index areas and the low refractive-index areas were omitted and core portions and clad portions provided to both sides thereof were formed in the core layer as shown in FIG. 17.

2. Evaluation Result of Optical Waveguide

With regard to the optical waveguides obtained in the Examples and the Comparative Examples, light intensity in the outgoing end surface was measured according to the following method.

2.1 Evacuation of intensity of Outgoing Light from Clad Portions

FIG. 13 is a view to explain a method of measuring intensity of outgoing light from a clad portion of an optical waveguide.
In this method, first, an incoming side light fiber 21 having a diameter of 50 μm was placed to an incoming side of the optical waveguide 10 which is a measuring object. The incoming side light fiber 21 was connected with the light emitting elements (not showing) for the incoming light to the optical waveguide 10, and was placed on the same surface as a light axis of the incoming side light fiber 21 and a light axis of the core portion 14 of the optical waveguide 10. Furthermore, the incoming side light fiber 21 could be scanned (moved) on the same surface as the core layer 13 along the incoming end surface 10a of the optical waveguide 10. In this regard, the moving width was set to 250 μm in both sides of the incoming side light fiber 21 in center of the light axis of the core portion 14 of the optical waveguide 10.
On the other hand, an outgoing side light fiber 22 having a diameter of 200 μm was placed to an outgoing side of the optical waveguide 10. The outgoing side light fiber 22 was connected with light receiving elements (not showing) for receiving the outgoing light from the optical waveguide 10, and was placed so that a light axis of the outgoing side light fiber 22 was placed on a position separated from the light axis of the core portion 14 of the optical waveguide 10 to 125 μm of the side of the side clad portion 15.
When light intensity is measured, if the incoming side light fiber 21 was moved while emitting the light, a part of the light passing in the optical waveguide 10 reached the outgoing side light fiber 22. At this time, by measuring the intensity of the incoming light to the outgoing side light fiber 22, evaluated was a relation between the position of the incoming side light fiber 21 and the intensity of the incoming light to the outgoing side light fiber 22.
Among the evaluation results, as a representative, the results of the Examples 1 to 3 and the Comparative Example were shown in FIG. 15. In this regard, it is to be noted that an abscissa axis of the graph of FIG. 15 shows the position of the incoming side light fiber on the basis of the light axis of the core portions of the optical waveguide 10, a longitudinal axis thereof shows light intensity ratio (loss) on the basis of the intensity of the light propagated from the core portion of the optical waveguide (light intensity when the light axis of the incoming side light fiber and the light axis of the outgoing side light fiber corresponded to the core portion of the optical waveguide).

As shown in FIG. 15, in the optical waveguide obtained in the Comparative Example, when the position of the incoming side light fiber was in the range of about 80 to 200 mm on the basis of the light axis of the core portion of the optical waveguide 10, the light intensity ratio was great large. Therefore, in the optical waveguide obtained in the Comparative Example, it was found out that the incoming light to each of the side clad portions was propagated so as to be almost the same as the core portion.

On the other hand, in the optical waveguide obtained in each of the Examples 1 to 3, all of the light intensities were totally low. In other words, in the each of the optical waveguides obtained in the Examples 1 to 3, since the incoming light to each of the side clad portions is greatly attenuated, it found out that sufficient S/N ratio was obtained.

Furthermore, although not showing, when the result of the example 4 was compared with the result of the Example 5, the result of the Example 5 was better than that of the Example 4. It is considered that this is because the high refractive-index areas having the particle shape are randomly arranged in the Example 5.

2.2 Evaluation of crosstalk

FIG. 14 is a view to explain a method of evaluating crosstalk.

In this method, first, an incoming side light fiber 21 having a diameter of 50 μm was placed to an incoming side of the optical waveguide 10 which is a measuring object. The incoming side light fiber 21 was connected with the light emitting elements (not showing) for the incoming light to the optical waveguide 10, and is placed on so as to correspond to the light axis of the incoming side light fiber 21 and the light axis of the core portion 14 of the optical waveguide 10.

On the other hand, an outgoing side light fiber 22 having a diameter of 62.5 μm was placed to an outgoing side of the optical waveguide 10. The outgoing side light fiber 22 was connected with the light receiving elements (not showing) for receiving the outgoing light from the optical waveguide 10. A light axis of the outgoing side light fiber 22 and the light axis of the core portion 14 of the optical waveguide 10 were placed on the same surface. Furthermore, the outgoing side light fiber 22 could be scanned (moved) on the same surface as the core layer 13 along the outgoing end surface 10b of the optical waveguide 10. In this regard, the moving width is set to 250 μm in both sides of the outgoing side light fiber 22 in center of the light axis of the core portion 14 of the optical waveguide 10.

When the light intensity is measured, if the outgoing side light fiber 22 is moved while emitting the light from the incoming side light fiber 21, the light passing in the core portions 14 reached the outgoing side light fiber 22. At this time, by setting an outside diameter of the outgoing side light fiber 22 larger than that of the core portion 14, it is possible to measure the intensity of the light leaked from the core portions 14. Therefore, a degree of the crosstalk was evaluated by evaluating a relation between the position of the outgoing side light fiber 22 and the intensity of the incoming light to the outgoing side light fiber 22.

Among the evaluation results, as a representative, the results of the Examples 2 to 4 and the Comparative Example were shown in FIG. 16. In this regard, it is to be noted that an abscissa axis of the graph of FIG. 16 shows the position of the outgoing side light fiber on the basis of the light axis of the core portion of the optical waveguide, and a longitudinal axis thereof shows a light intensity ratio (loss) on the basis of the intensity of the light propagated from the core portion of the optical waveguide (light intensity when the light axis of the outgoing side light fiber corresponded to the light axis of the core portion).

As shown in FIG. 16, in the optical waveguide obtained in each of the Examples 2 to 4, the light intensity in the bottom of the peak of the spectrum became low as compared with the optical waveguide obtained in the Comparative Example. The peak of the spectrum corresponded to the intensity of the light propagated from the core portions. Therefore, in other words, in the Examples 2 to 4 as compared with the Comparative Example, it was found out that the intensity of the light propagated from the clad portions became low with respect to the intensity of the light propagated from the core portions, so that the crosstalk was relatively lowered.

## INDUSTRIAL APPLICABILITY

An optical waveguide according to the present invention includes a plurality of core portions and a plurality of clad portions in which each core portion being provided between a pair of clad portions. Each of the plurality of clad portions comprises: a low refractive-index area being in contact with the core portion, wherein a refractive index of the low refractive-index area is lower than that of the plurality of core portions; and a plurality of high refractive-index areas separated from the core portion through the low refractive-index area, wherein a refractive index of the plurality of high refractive-index areas is higher than the refractive index of the low refractive-index area. The plurality of high refractive-index areas are provided in the clad portion in an aligned manner or in a scattered manner. Therefore, the incoming light to the clad portions is prevented from propagating to an outgoing end as it is, so that the light intensity is lowered when the light is received by the light receiving elements. This makes it possible to improve an S/N ratio of the light propagating the optical waveguide, thereby preventing crosstalk and the like. As a result, it is possible to provide the optical waveguide which can perform optical communications for high quality. Furthermore, by providing such an optical

waveguide which can perform the optical communications for the high quality, it is possible to provide an optical wiring line, an optical/electrical combination substrate and an electronic device each having high performance. Accordingly, the optical waveguide, the optical wiring line, the optical/electrical combination substrate and the electronic device according to the present invention have industrial applicability.

## Claims

1. An optical waveguide including a plurality of core portions and a plurality of clad portions in which each core portion being provided between a pair of clad portions, wherein each of the plurality of clad portions comprising:

    a low refractive-index area being in contact with the core portion, wherein a refractive index of the low refractive-index area is lower than that of the plurality of core portions; and
    a plurality of high refractive-index areas separated from the core portion through the low refractive-index area, wherein a refractive index of the plurality of high refractive-index areas is higher than the refractive index of the low refractive-index area;
    wherein the plurality of high refractive-index areas are provided in the clad portion in an aligned manner or in a scattered manner.

2. The optical waveguide as claimed in claim 1, wherein the plurality of high refractive-index areas are constituted of the same kind of material as a constituent material of the plurality of core portions.

3. The optical waveguide as claimed in claim 1, wherein a difference between the refractive index of the plurality of high refractive-index areas and the refractive index of the low refractive-index area is 0.5% or more.

4. The optical waveguide as claimed in claim 1, wherein the plurality of high refractive-index areas are provided in the clad portion for refracting light passing through the clad portion in a direction far away from the core portion or for scattering the light in the clad portion ununiformly.

5. The optical waveguide as claimed in claim 1, wherein each of the plurality of high refractive-index areas is formed into a particle shape.

6. The optical waveguide as claimed in claim 5, wherein each high refractive-index area having the particle shape is formed with an irregularities on its outer surface.

7. The optical waveguide as claimed in claim 5, wherein the high refractive-index areas each having the particle shape are ununiformly scattered in the clad portion.

8. The optical waveguide as claimed in claim 1, wherein each of the plurality of high refractive-index areas is formed into a strip shape,

9. The optical waveguide as claimed in claim 8, wherein each of the high refractive-index areas having the strip shape has a longitudinal axis line, and wherein the high refractive-index areas are provided in the clad portion in a state that their longitudinal axis lines are inclined with respect to an axial line of the core portion so that an angle defined by the longitudinal axis line of each high refractive-index area and a perpendicular line which is normal to the axial line of the core portion forms an acute angle.

10. The optical waveguide as claimed in claim 9, wherein the acute angle defined by the longitudinal axis line of each high refractive-index area having the strip shape and the perpendicular line is in the range of 10 to 85°.

11. The optical waveguide as claimed in claim 9, wherein each of the refractive-index areas having the strip shape is formed so as to have an elongated triangle shape.

12. The optical waveguide as claimed in claim 11, wherein each of the high refractive-index areas having the elongated triangle shape is configured so that a cross-sectional area of the elongated triangle shape gradually increases as being far away from the core portion.

13. The optical waveguide as claimed in claim 8, wherein each of the high refractive-index areas having the strip shape

has a longitudinal axis line, and wherein the high refractive-index areas are provided in the clad portion so that extended lines of their longitudinal axis lines are perpendicular to an axial line of the core portion.

**14.** The optical waveguide as claimed in claim 13, wherein each of the high refractive-index areas having the strip shape is formed so as to have an elongated rectangle shape.

**15.** The optical waveguide as claimed in claim 8, wherein the plurality of high refractive-index areas each having the strip shape are arranged in the clad portion in parallel with each other.

**16.** The optical waveguide as claimed in claim 1, wherein the optical waveguide has an incoming end surface from which light enters the core portion and an outgoing end surface opposite to the incoming end surface,
wherein the plurality of high refractive-index areas are arranged so as not to expose to the incoming end surface and the outgoing end surface.

**17.** The optical waveguide as claimed in claim 1, wherein the plurality of high refractive-index areas is manufactured by the same process as that of the plurality of core portions.

**18.** The optical waveguide as claimed in claim 1, wherein the optical waveguide is comprised of a laminated body in which a first layer, a second layer and a third layer are laminated in this order,
wherein a part of the second layer is constituted from the plurality of core portions, wherein a remaining part of the second layer, the first layer and the third layer are constituted from the plurality of clad portions.

**19.** The optical waveguide as claimed in claim 18, wherein the plurality of high refractive-index areas are provided in the remaining part of the second layer.

**20.** The optical waveguide as claimed in claim 1, wherein the plurality of core portions and at least a part of the plurality of clad portions are constituted of a norbornene-based polymer as a main component thereof.

**21.** An optical wiring line provided with the optical waveguide defined in claim 1.

**22.** An optical/electrical combination substrate, comprising:

a substrate;
an electrical wiring line mounted on the substrate; and
the optical wiring line defined in claim 21 and provided on the substrate.

**23.** An electronic device provided with the optical/electrical combination substrate defined in claim 22.

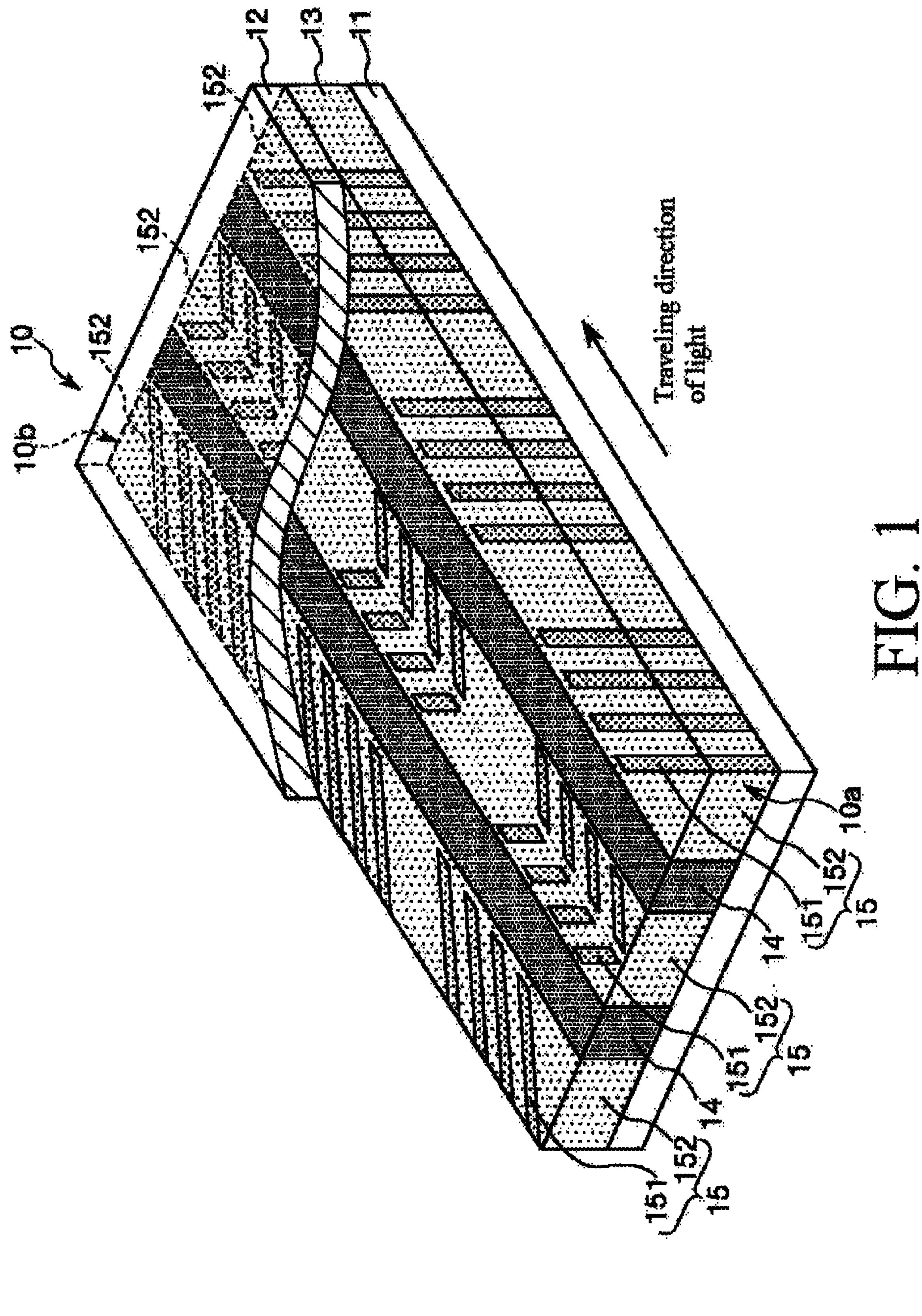
10
10b
152
152
152
12
13
11
Traveling direction of light
10a
152
151
152
15
14
151
152
15
14
152
151
152
15
14
151
152
15

FIG. 1

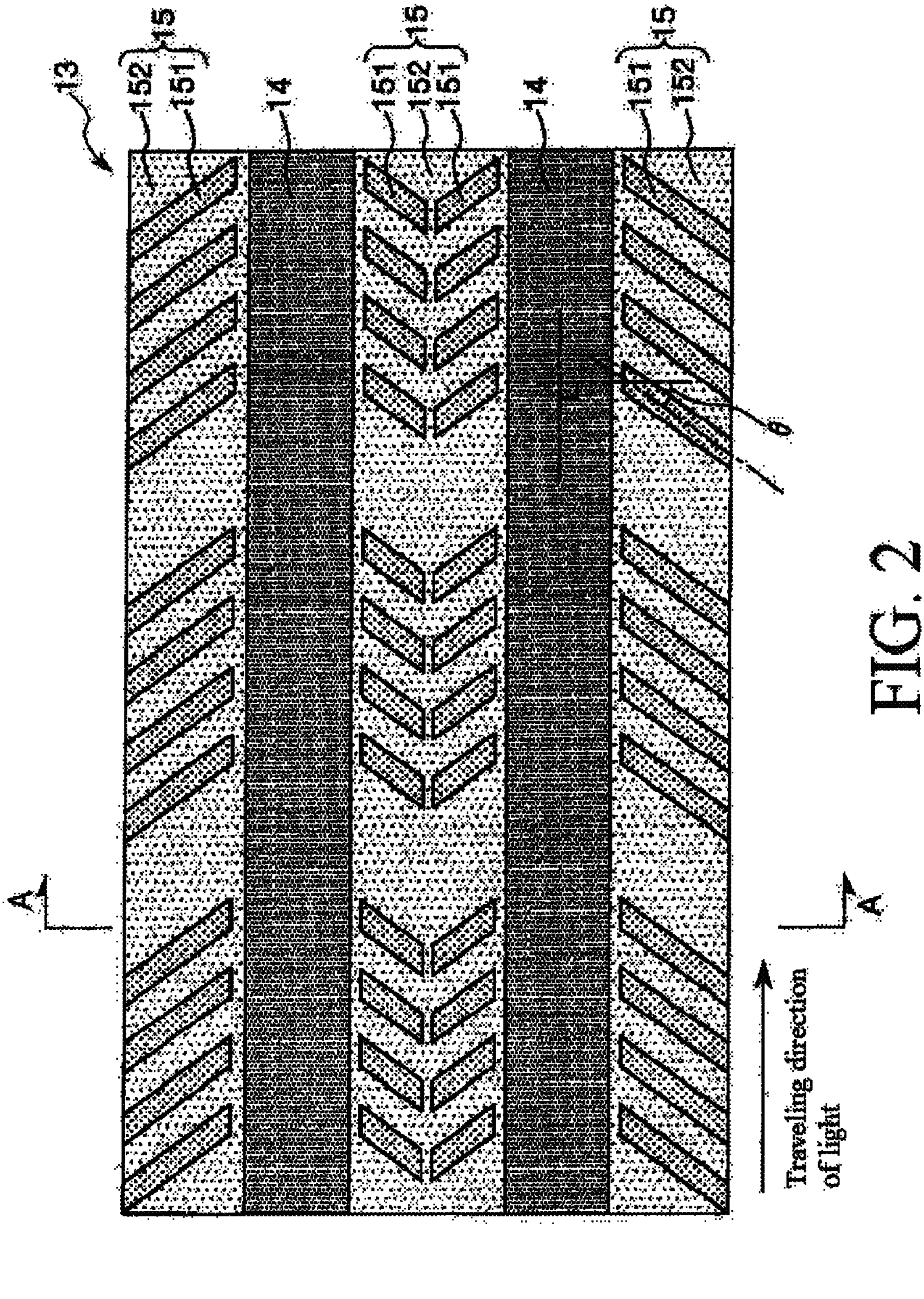
13
152
151
15
14
151
152
151
15
14
151
152
15
θ
A
A
Traveling direction of light

FIG. 2

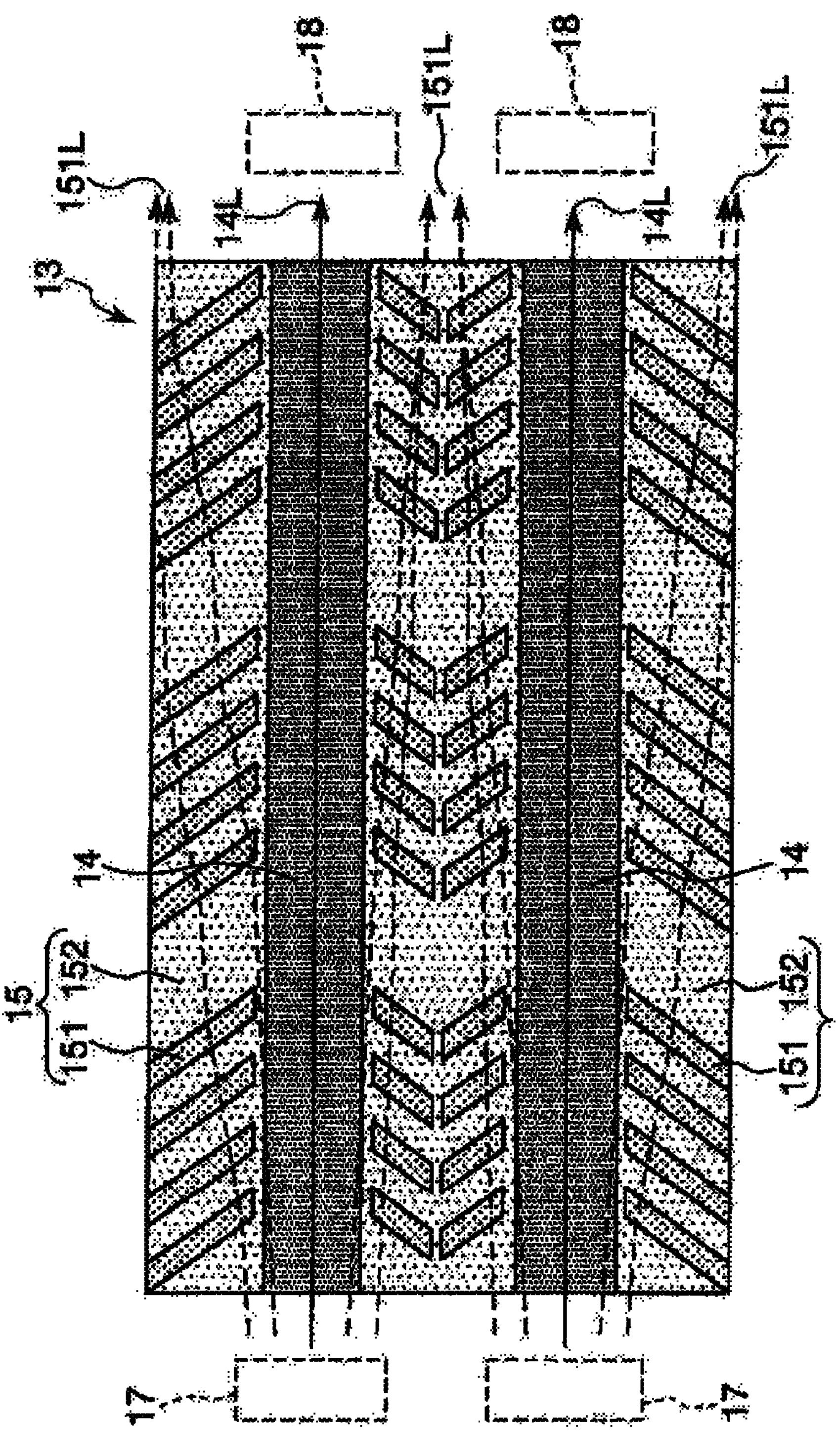


FIG. 3

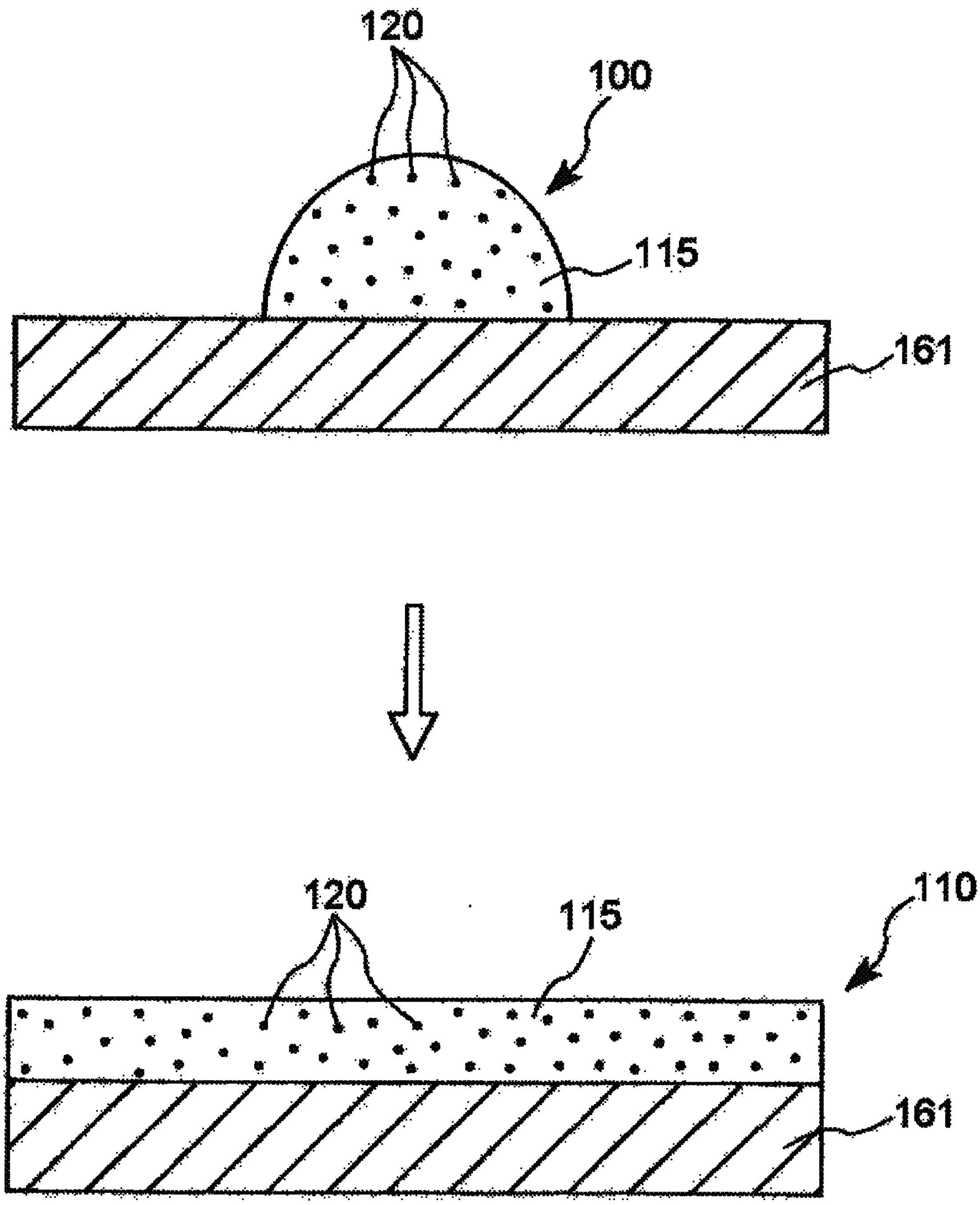


FIG. 4

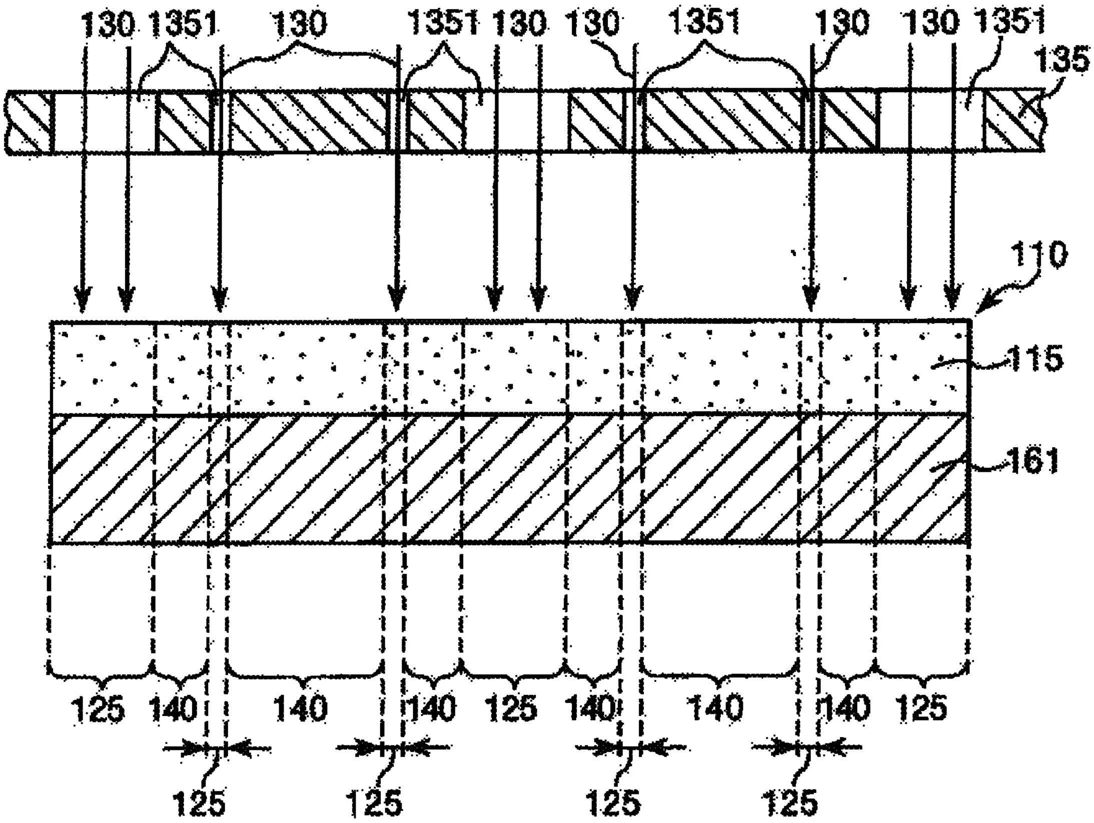
130 1351 130 1351 130 130 1351 130 130 1351
135
110
115
161
125 140 140 140 125 140 140 140 125
125 125 125 125

FIG. 5

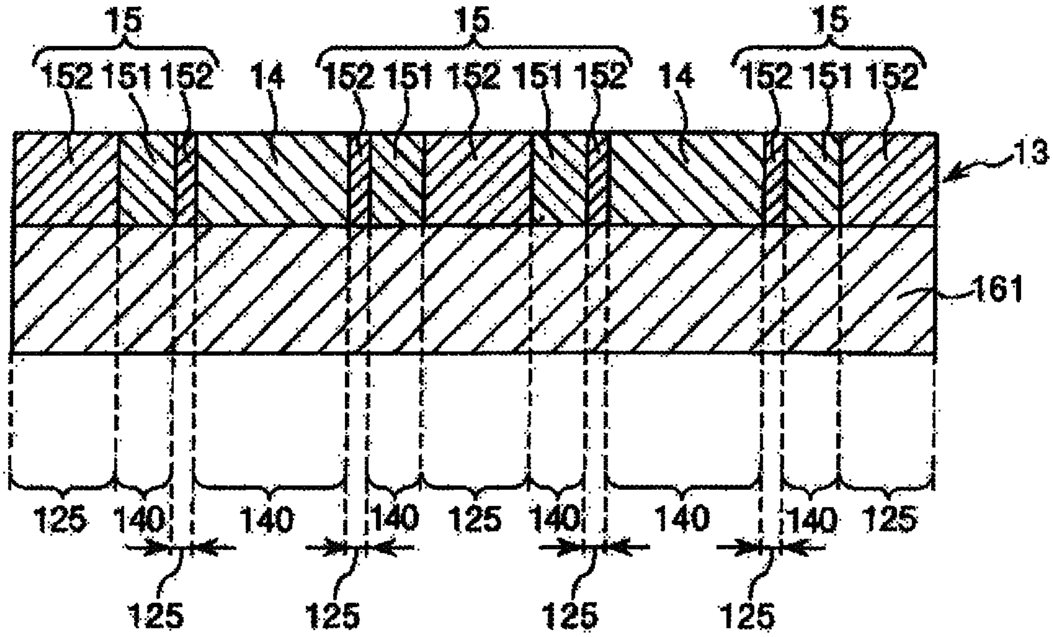
15
15
15
152 151 152
14
152 151 152 151 152
14
152 151 152
13
161
125 140
140
140 125 140
140
140 125
125
125
125
125

FIG. 6

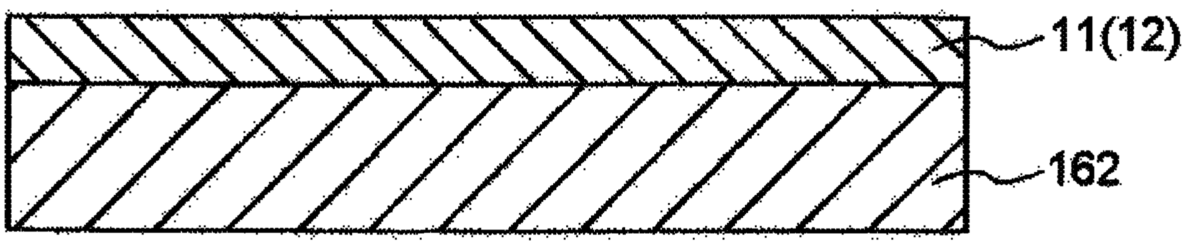
11(12)
162

FIG. 7

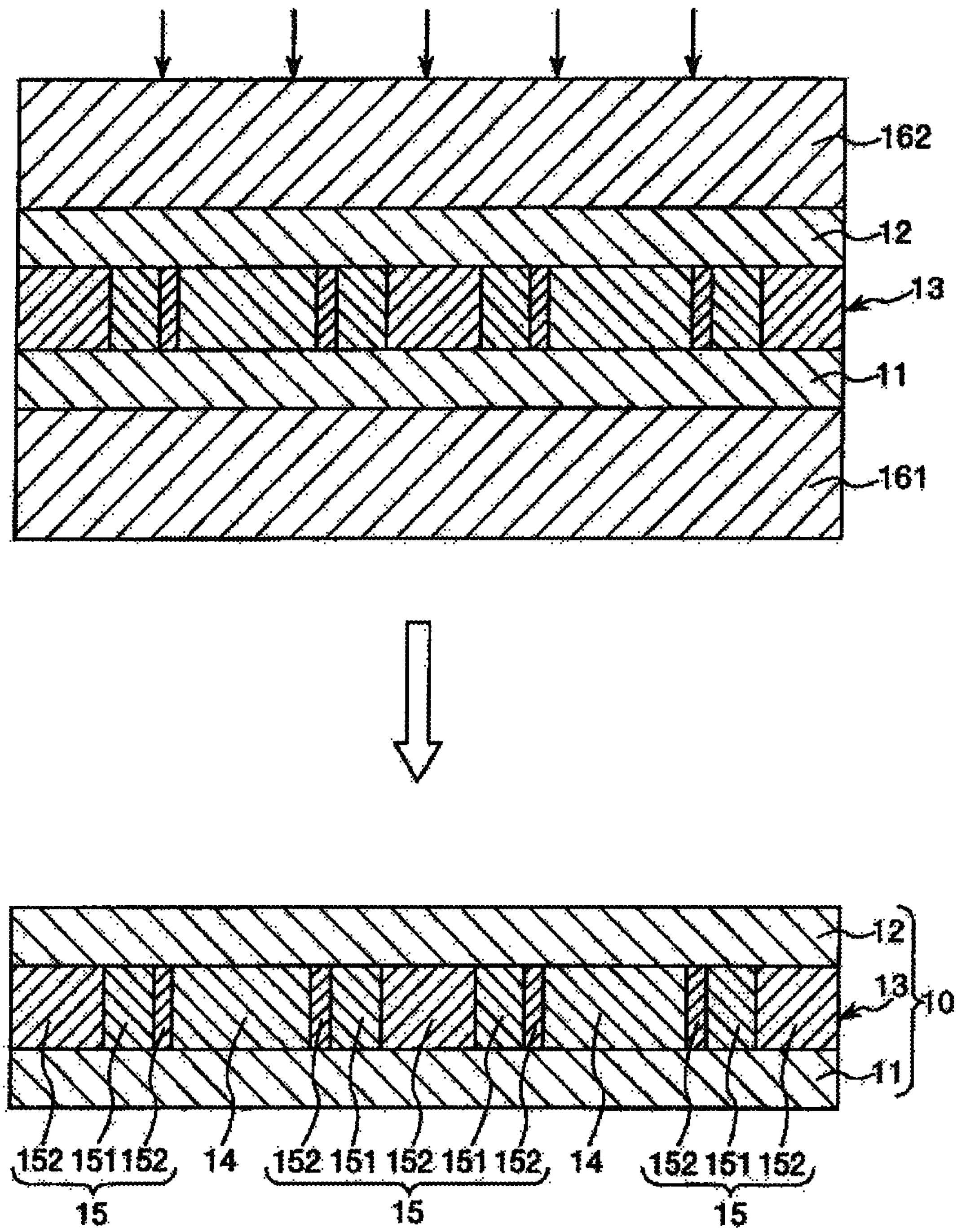
162
12
13
11
161
12
13
10
11
152 151 152
14
152 151 152 151 152
14
152 151 152
15
15
15

FIG. 8

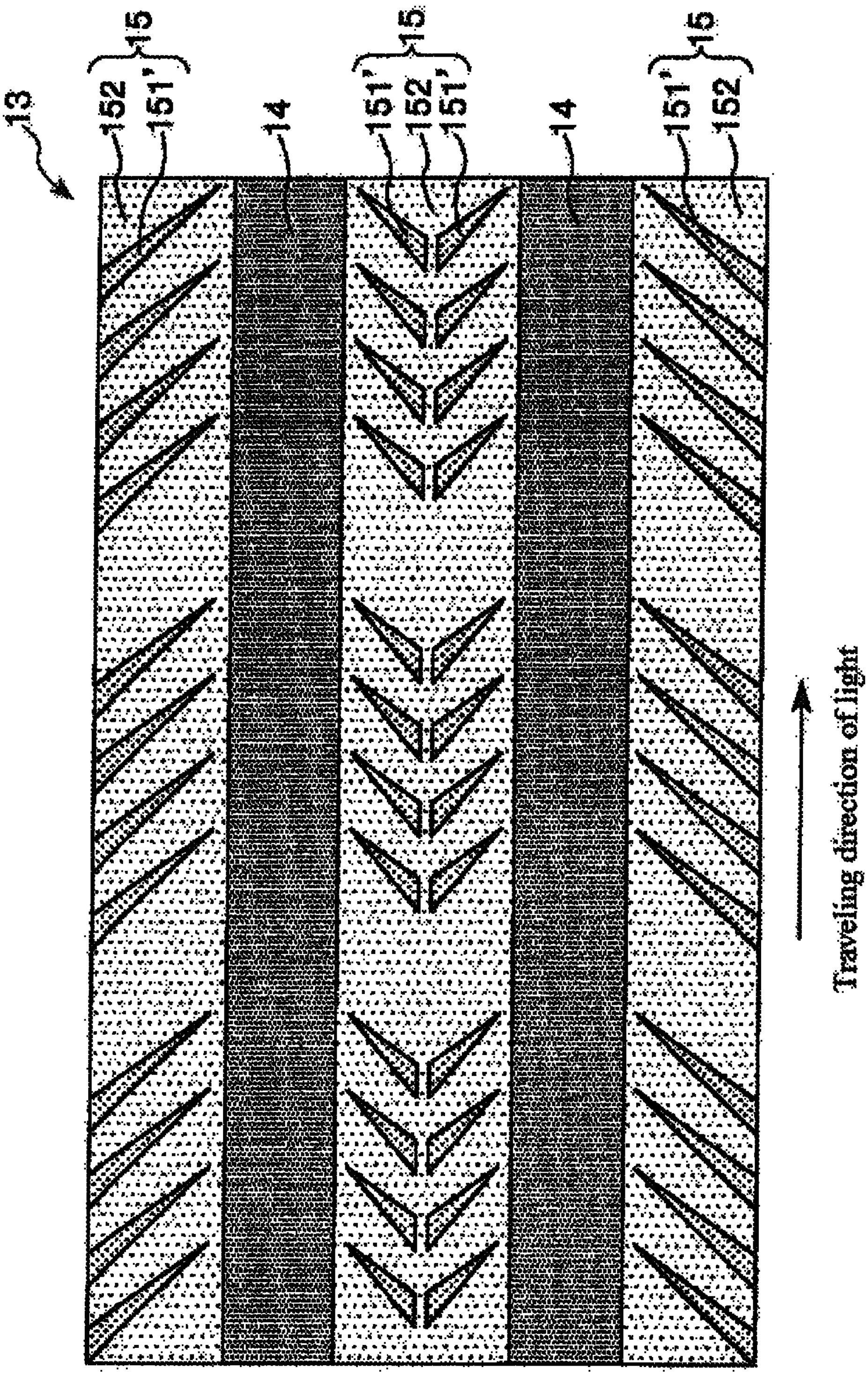
13
152
151'
15
14
151'
152
151'
15
14
151'
152
15
Traveling direction of light

FIG. 9

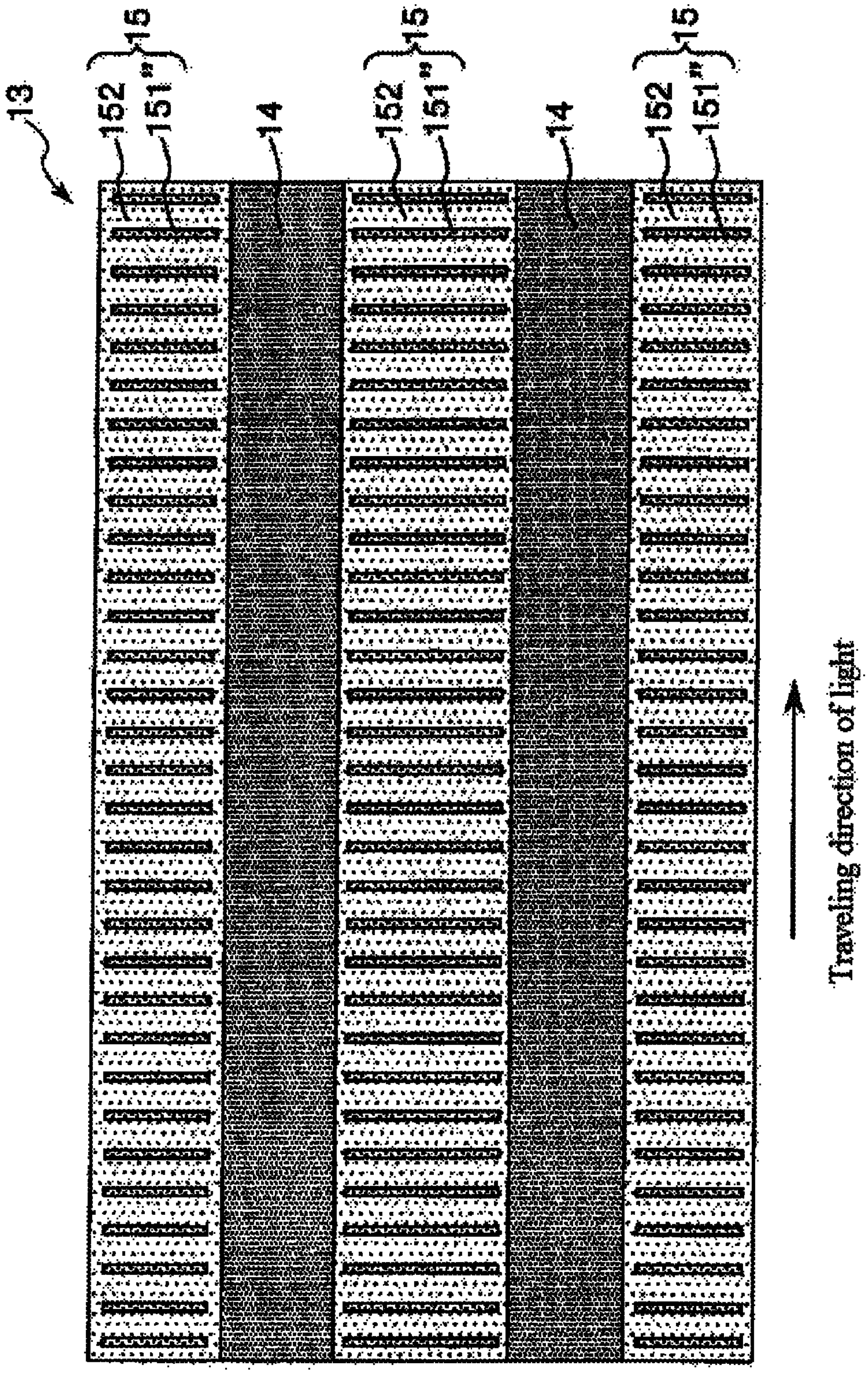


FIG. 10

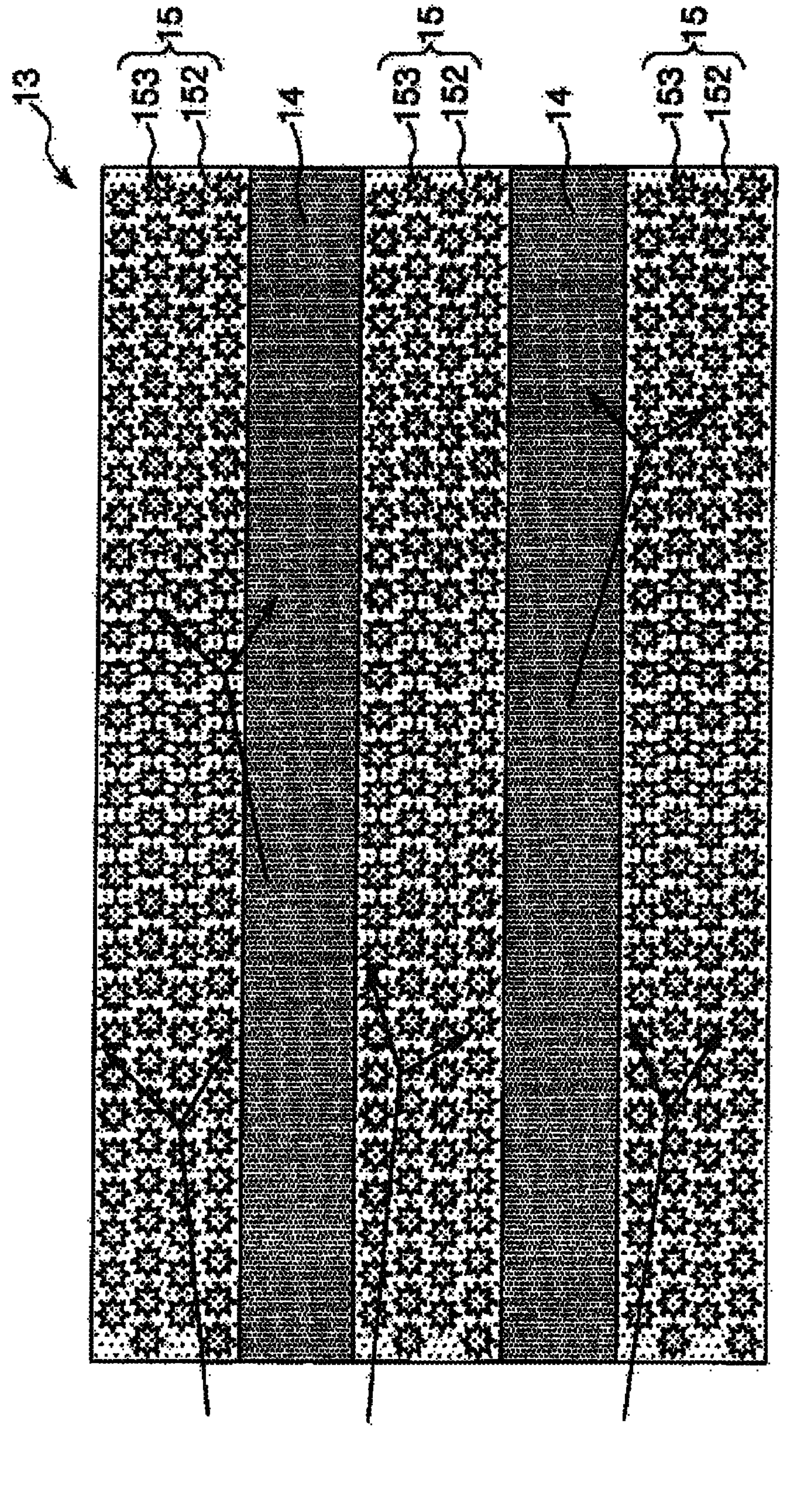


FIG. 11

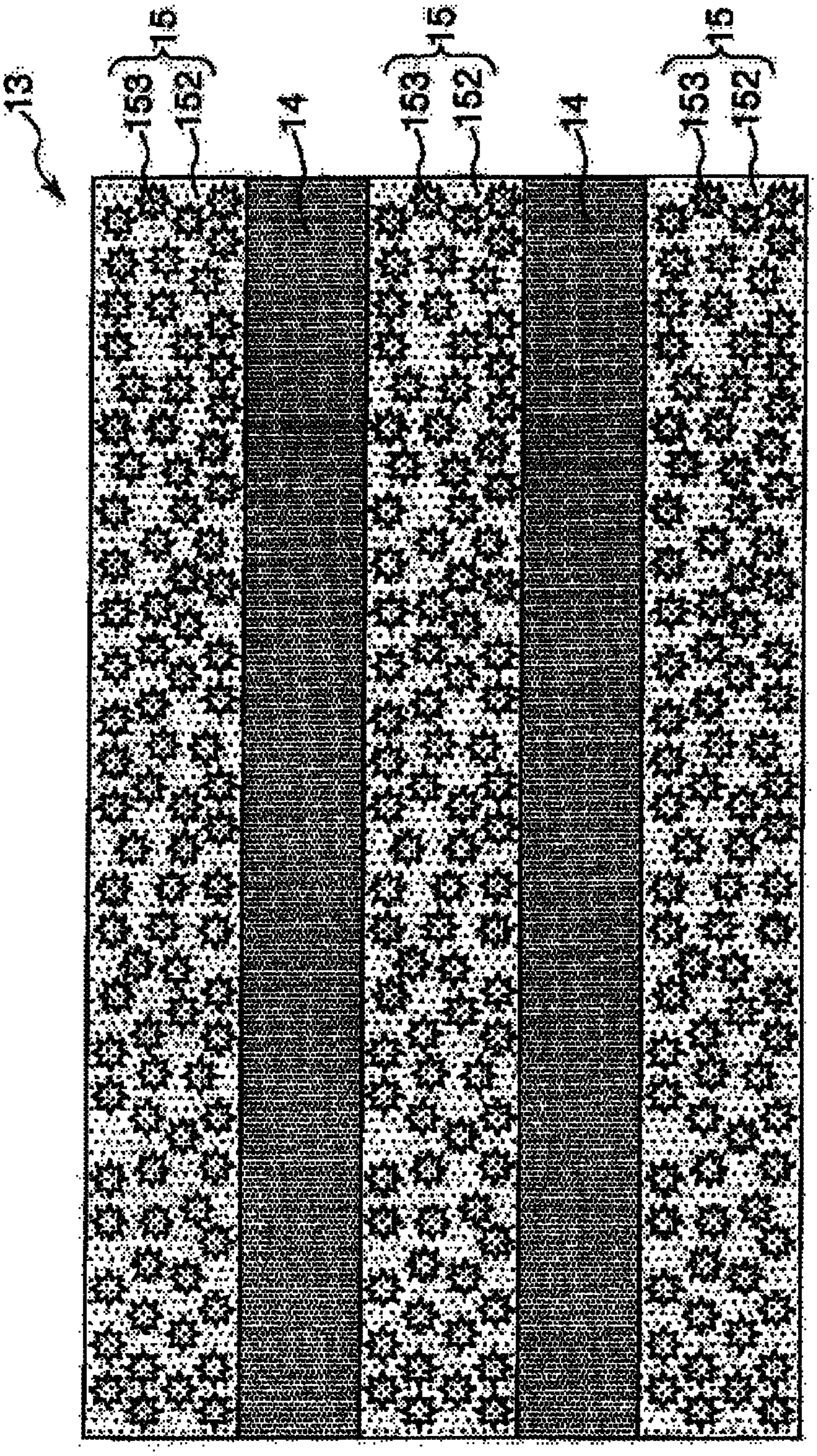


FIG. 12

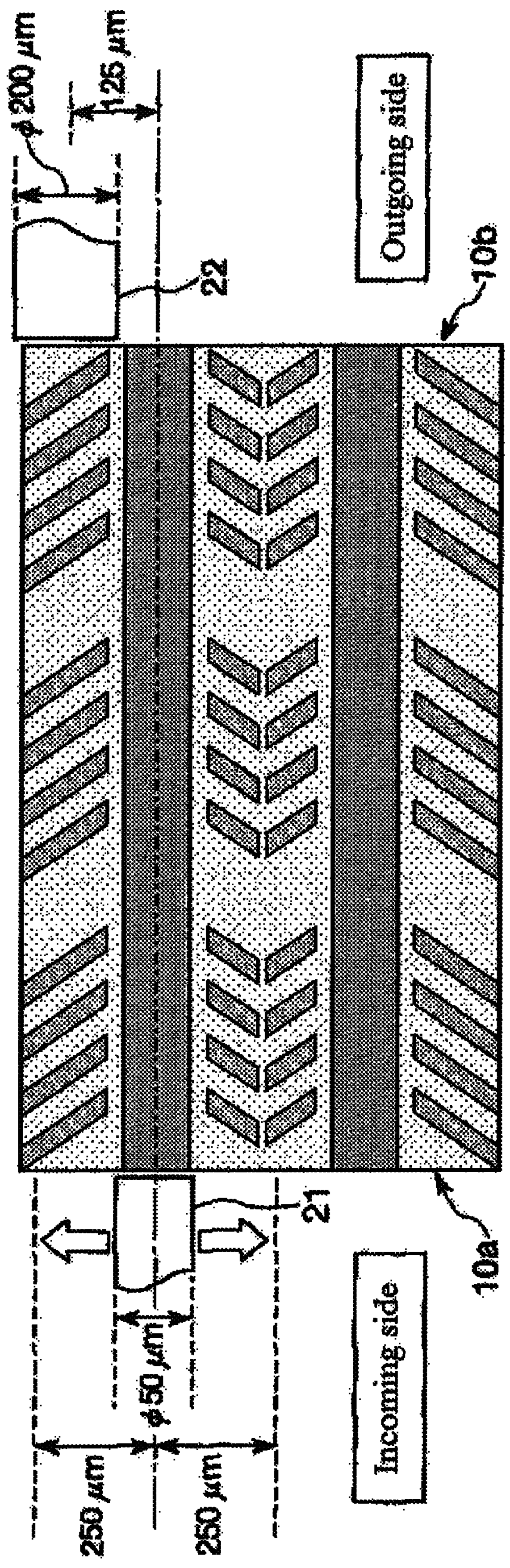


Method of measuring intensity of outgoing light from clad portions

FIG. 13

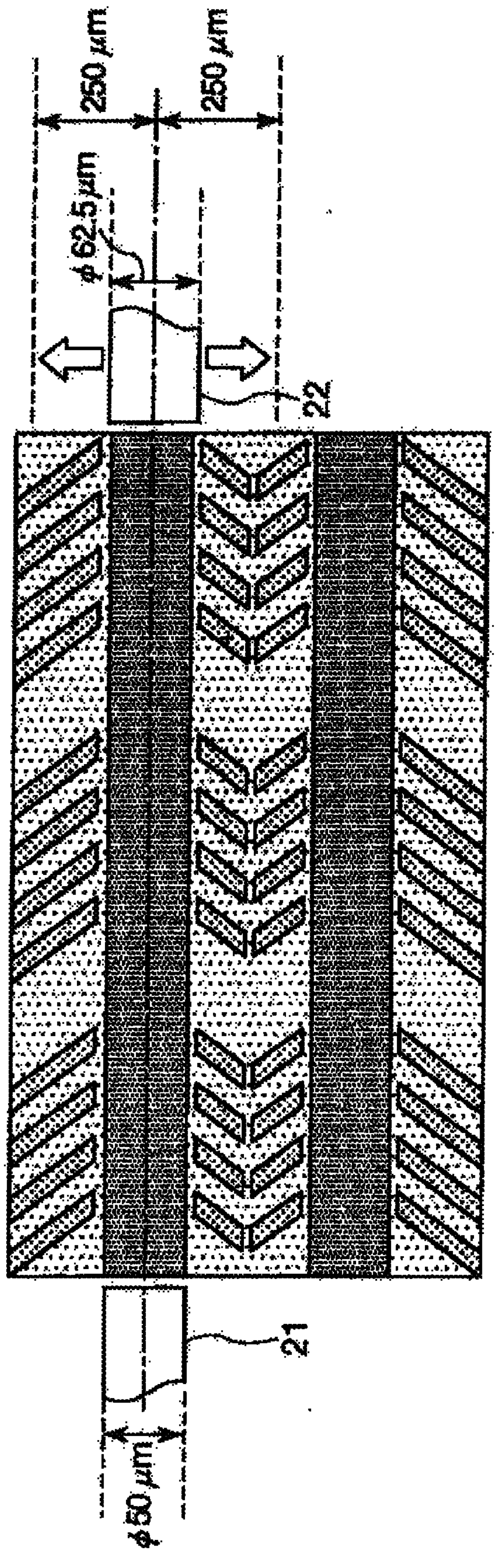


Method of evaluating crosstalk

FIG. 14

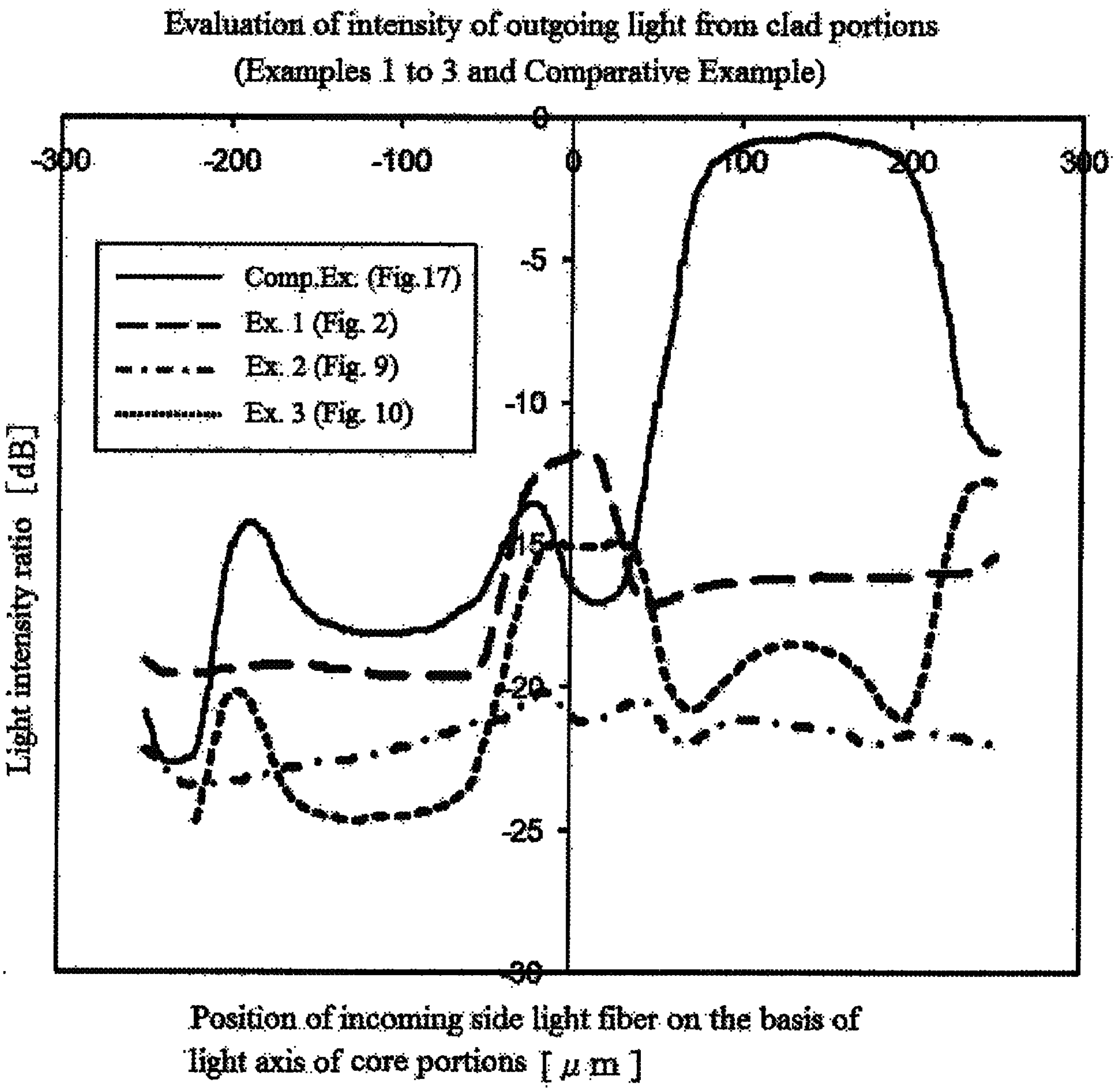
Evaluation of intensity of outgoing light from clad portions
(Examples 1 to 3 and Comparative Example)
-300
-200
-100
0
100
200
300
0
-5
-10
-15
-20
-25
-30
Comp.Ex. (Fig.17)
Ex. 1 (Fig. 2)
Ex. 2 (Fig. 9)
Ex. 3 (Fig. 10)
Light intensity ratio [dB]
Position of incoming side light fiber on the basis of
light axis of core portions [μm]

FIG. 15

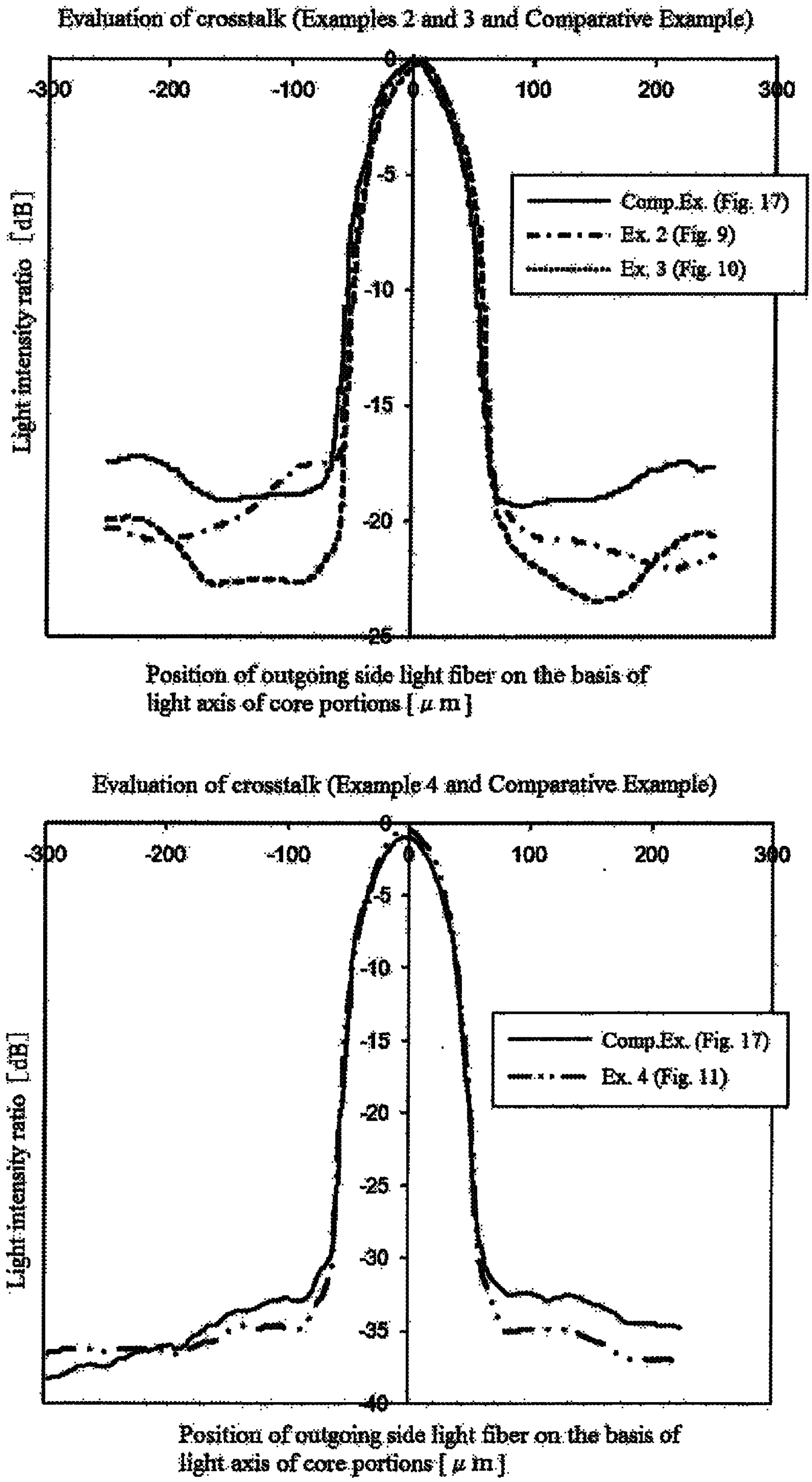
Evaluation of crosstalk (Examples 2 and 3 and Comparative Example)
-300
-200
-100
0
100
200
300
-5
-10
-15
-20
-25
Light intensity ratio [dB]
Comp.Ex. (Fig. 17)
Ex. 2 (Fig. 9)
Ex. 3 (Fig. 10)
Position of outgoing side light fiber on the basis of
light axis of core portions [μm]
Evaluation of crosstalk (Example 4 and Comparative Example)
-300
-200
-100
0
100
200
300
-5
-10
-15
-20
-25
-30
-35
-40
Light intensity ratio [dB]
Comp.Ex. (Fig. 17)
Ex. 4 (Fig. 11)
Position of outgoing side light fiber on the basis of
light axis of core portions [μm]

FIG. 16

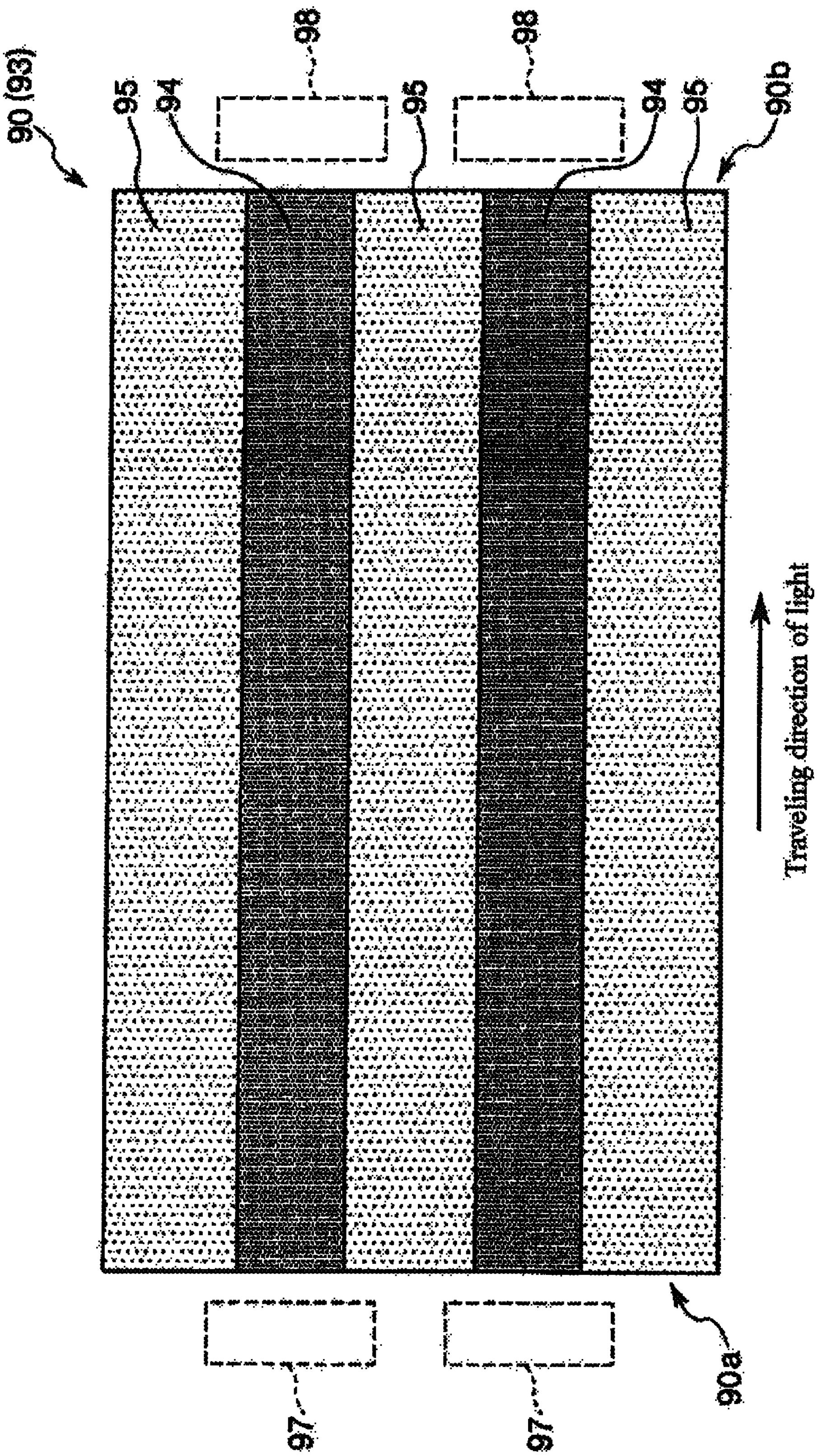
90 (93)
95
94
98
95
98
94
95
90b
97
97
90a
Traveling direction of light

FIG. 17

## INTERNATIONAL SEARCH REPORT

International application No.
PCT/JP2009/065094

**A. CLASSIFICATION OF SUBJECT MATTER**
G02B6/122(2006.01)i, G02B6/12(2006.01)i

According to International Patent Classification (IPC) or to both national classification and IPC

**B. FIELDS SEARCHED**

Minimum documentation searched (classification system followed by classification symbols)
G02B6/12-6/14

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2004-46021 A (Omron Corp.), 12 February 2004 (12.02.2004), paragraphs [0041], [0043]; fig. 8, 14 (Family: none) | 1-17,20-23<br>18,19 |
| Y | JP 2006-330118 A (Sumitomo Bakelite Co., Ltd.), 07 December 2006 (07.12.2006), fig. 3 (Family: none) | 18,19 |
| A | JP 2005-148468 A (Sony Corp.), 09 June 2005 (09.06.2005), entire text; all drawings & US 2005/0105868 A1 | 1-23 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| 13 October, 2009 (13.10.09) | 27 October, 2009 (27.10.09) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2009/065094

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-156538 A (Minolta Co., Ltd.), 31 May 2002 (31.05.2002), entire text; all drawings (Family: none) | 1-23 |
| A | JP 11-177182 A (Mitsubishi Electric Corp.), 02 July 1999 (02.07.1999), entire text; all drawings (Family: none) | 1-23 |

Form PCT/ISA/210 (continuation of second sheet) (April 2007)

**INTERNATIONAL SEARCH REPORT**

International application No.
PCT/JP2009/065094

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

The search has revealed that the invention of claim 1 is not novel, since it was disclosed in Document: JP 2004-46021 A (Omron Corp.), 12 February 2004 (12.02.2004), paragraph [0041], paragraph [0043], fig. 8, 14.

As a result, the invention of claim 1 does not have any special technical feature, since it makes no contribution over the prior art.

1. ☐ As all required additional search fees were timely paid by the applicant, this international search report covers all searchable claims.
2. ☒ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest** the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004333883 A